# FASCICULE DE BREVET EUROPEEN

(11) **EP 2 091 136 B1**
(45) Date de publication et mention de la délivrance du brevet: **25.08.2010**
(21) Numéro de dépôt: 09152948.7
(22) Date de dépôt: 16.02.2009
(51) Int. Cl.: H02K 11/04

(54) **Palier de machine électrique tournante et machine électrique tournante comportant un tel palier**
Lagervorrichtung einer elektrischen Maschine und rotierende elektrische Maschine, die eine solche Lagervorrichtung umfasst
Bearing apparatus of an electric machine and electric rotating machine comprising the same

(30) Priorité: 18.02.2008 FR 0851021
(43) Date de publication de la demande: 19.08.2009
(73) Titulaire: Valeo Equipements Electriques Moteur, 94046 Créteil Cedex (FR)
(72) Inventeur: Le Douarin, Michel, 92330, Sceaux (FR)
(74) Mandataire: Gamonal, Didier

(56) Documents cités:
- EP-A- 0 671 804
- US-A- 5 712 517
- US-A1- 2006 012 254
- US-A1- 2007 035 188

## Description

### Domaine de l'invention

L'invention concerne un palier pour machine électrique tournante à ventilation interne, telle qu'un alternateur de véhicule automobile, ledit palier constituant un dissipateur de chaleur appartenant à un dispositif de redressement de courant, que comporte la machine électrique tournante.

La présente invention concerne également une machine électrique tournante, comportant un tel palier.

### Art antérieur

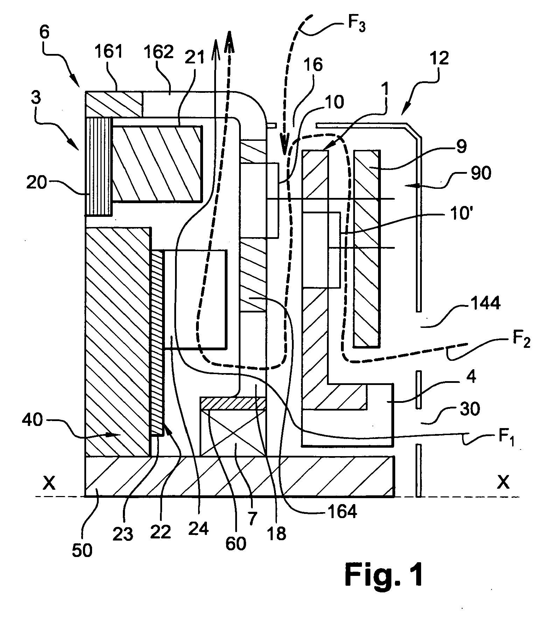

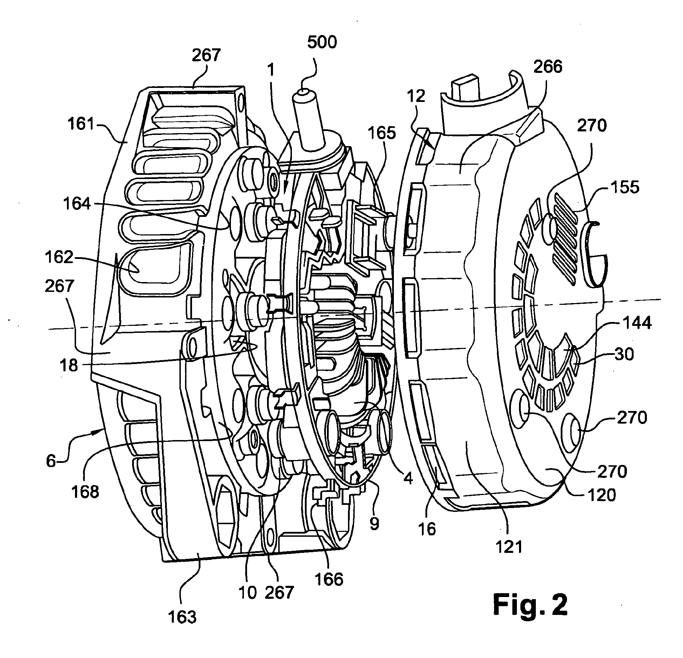

On a représenté schématiquement et partiellement à la figure 1, en demie-coupe axiale, et à la figure 2, en perspective et en éclaté de l'arrière, une machine électrique tournante à ventilation interne de l'art antérieur sous la forme d'un alternateur polyphasé pour véhicules automobiles du type de celui décrit dans le document US-B- 7 019 424 conforme au préambule de la revendication 1 et incorporé par référence dans la description.

Cette machine comprend un dispositif de circulation forcée d'un fluide de refroidissement, tel que de l'air, un stator 3 doté d'un bobinage et un rotor 40, qui sont logés dans un carter pourvu d'au moins deux flasques appelés respectivement palier avant et palier arrière. Seul le palier arrière 6 est visible à la figure 1. Ce palier 6 comprend un fond doté d'une face frontale 164 et une jupe 161 périphérique globalement cylindrique dotée d'une une extrémité libre ouverte et d'une extrémité fermée par la face frontale 164. Ce palier, ici de forme creuse, tout comme le palier avant, comprend des ouvertures d'admission d'air frais 18 de forme trapézoïdale réalisées dans la face frontale 164, et des fentes de refoulement d'air chaud 162 réalisées dans la jupe 161. Chaque fente 162 comprend une partie axiale s'étendant dans la jupe 161 et une partie radiale s'étendant dans une zone périphérique de la face 164.

Les paliers avant et arrière sont fixés l'un à l'autre, par exemple à l'aide de tirants, pour former le carter de logement du stator 3 et du rotor 40 comme visible par exemple dans les documents US-B-7 019 424, EP-A-O 515 259 et US-A-0 4 488070.

A cet effet le palier 6 présente des bossages 267 troués pour chacun le passage d'un tirant se vissant dans une surépaisseur du palier avant comme par exemple à la figure 1 du document EP 0 515 259.

Il est également prévu un capot de protection 12 d'au moins un composant électronique. Ce capot renferme ce composant et est ici en matière plastique.

Dans les documents EP-A-O 515 259 et US-B-7019 424 ce capot est rapporté sur le palier arrière, tandis que dans le document US-A-0 4 488 070 ce capot est d'un seul tenant avec le palier arrière.

Des composants électroniques, tels que des diodes 10, 10' ou des transistors du type MOSFET, et/ou au moins un régulateur de tension 165, sont montés à l'intérieur du capot 12 comme visible à la figure 2 identique à la figure 8 du document US-B-7 019 424.

Les diodes 10, 10' ou en variante les transistors du type MOSFET, appartiennent à un dispositif de redressement de courant 90 pour redresser le courant alternatif produit par le bobinage du stator 3 en un courant continu pour alimenter les accessoires et/ou recharger la batterie du véhicule automobile.

Ce dispositif 90 comporte un dissipateur de chaleur positif 1, un dissipateur de chaleur négatif et un connecteur 9.

Le dissipateur 1 porte le jeu de diodes 10' appelées diodes positives. Il est solidaire de la face 164 en étant fixé sur celui-ci à isolation électrique, par exemple à l'aide de vis, via le connecteur 9.

La référence 163 désigne une patte de fixation de l'alternateur sur une partie fixe du véhicule automobile.

Dans cette réalisation le dissipateur négatif est constitué par le fond du palier 6 à face frontale 164. On n'a pas référencé également les trous réalisés dans cette face 164 pour montage des diodes 10 destinées ici à être emmanchées à force chacune dans un trou.

Ces trous constituent des zones de montage des diodes 10. Ce dissipateur est dit dissipateur négatif et les diodes 10 sont dites diodes négatives car le palier 6 est relié à la masse du véhicule automobile

Le dissipateur 1 présente ici des ailettes 4 à sa périphérie interne. Le connecteur 9 porte des pattes 166.

Le capot 12, de forme annulaire et creuse, comporte une jupe 121 dotée d'une pluralité d'ouvertures 16 radiales d'entrée d'air de forme oblongue et un fond 120 doté de deux séries d'ouvertures 144, 30 axiales d'entrée d'air. Les ouvertures 16 s'étendent ici circonférentiellement et au voisinage de la face frontale 164 du palier 6. Ces ouvertures 16 sont décalées axialement par rapport aux ouvertures 144, 30.

Le fond 120 comporte également des ouvertures axiales d'entrée d'air 155 en regard du régulateur de tension 165 porté par le fond à face 164 du palier 6.

La jupe 121 présente également une saillie pour le passage de la borne 500, dite borne B+, destinée à être reliée via un câble à la borne positive de la batterie du véhicule et c'est pour cette raison que le dissipateur 1 est appelé dissipateur positif et les diodes 10' diodes positives. Cette borne 500 est solidaire du dissipateur 1, ici métallique tout comme le palier 6. Le palier 6 et le dissipateur 1 sont par exemple à base d'aluminium.

La jupe du capot 12 présente des saillies 266 de forme bombée pour la réception chacune d'une patte 166.

Ces saillies 266 enveloppent et protègent les pattes 166, qui constituent les extrémités dénudées de traces électriquement conductrices noyées dans le contacteur 9 présentant un corps électriquement isolant, ici en matière plastique isolante.

Le connecteur 9 comporte également un réseau de traces électriquement conductrices noyées dans le corps du connecteur 9 et localement dénudées pour relier entre elles les queues des diodes 10, 10', comme visible par exemple à la figure 5 du document US-B-7 019 424.

Chaque patte 166 est destinée à être reliée, ici par sertissage, à la sortie d'un des enroulements des phases que comporte le bobinage du stator 3, ici polyphasé. Ces sorties sont visibles par exemple à la figure 7 du document US-B-7 019 424 auquel on se reportera. Ces sorties traversent la face 164 à la faveur d'ouvertures spécifiques de celle-ci.

On voit que la face 164 présente à sa périphérie externe une portée annulaire de centrage 168 pour le centrage de la jupe du capot 12, en contact intime à sa périphérie interne avec la périphérie externe de cette portée 168 formant un épaulement.

L'extrémité libre de la jupe 121 vient en contact avec la face 164 au niveau de la portée 168.

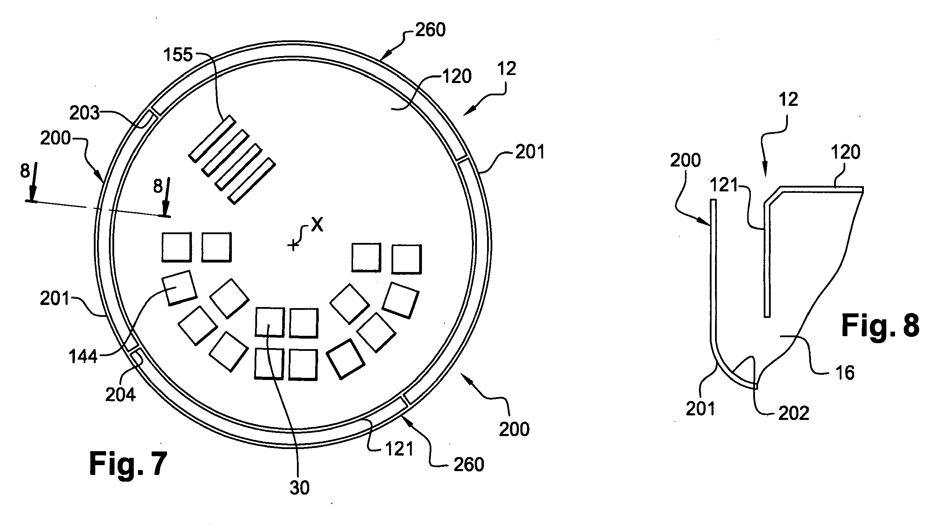

Ce capot 12 est solidarisé par tout moyen au palier 6. Par exemple la face 164 porte des goujons (non visibles à la figure 1) pour montage par encliquetage du capot 12, dont le fond présente des séries de points de fixation 270 à languettes radialement déployables destinées à venir en prise avec les extrémités filetées des goujons. Pour plus de précisions on se reportera au document WO-A- 01/69762, notamment à la figure 7 de celui-ci. En variante la fixation est réalisée à l'aide d'un écrou se vissant sur l'extrémité filetée du goujon ou en variante d'un boulon.

Dans la figure 1 on a représenté de manière schématique une partie des autres composants ou constituants de l'alternateur, ainsi que la partie arrière de la figure 2 de cet alternateur, sachant que le stator 3 entoure le rotor 40 avec présence d'un entrefer de faible valeur.

Le rotor 40 est solidaire d'un arbre 50 et consiste par exemple en un rotor à griffes, tel que visible dans les documents précités, ou un rotor à pôles saillants. Ce rotor comporte au moins un bobinage d'excitation dont les extrémités sont reliées électriquement au régulateur de tension via des bagues collectrices, des balais et un porte-balais comme décrit dans les document EP 0 515 259 et US-A- 4 488 070. Par simplicité on n'a pas représenté à la figure 1 les bagues collectrices, les balais, le porte-balais et le régulateur de tension.

L'axe longitudinal ou axial X-X de l'arbre 50, constitue l'axe de symétrie et de rotation de l'alternateur. Le fond du palier 6, et donc la face 164, est d'orientation transversale par rapport à cet axe X-X, tandis que la jupe 161 est d'orientation axiale par rapport à cet axe X-X. L'arbre 50 est supporté par un palier, tel qu'un roulement à bille 7, monté dans un logement correspondant 60, qui est réalisé au centre de la face frontale 164 du palier arrière 6. Le stator 3 présente un corps rainuré 20, par exemple sous la forme d'un paquet de tôles, portant le bobinage du stator. Ce bobinage comporte au moins un enroulement par phase Les enroulements traversent le corps du stator et s'étendent de part et d'autre du corps du stator pour formation de chignons, dont l'un est visible de manière schématique en 21 à la figure 1.

De manière connue les enroulements sont réalisés à partir de fils conducteurs continus ou à partir de segments conducteurs reliés entre eux par soudage comme décrit par exemple dans le document US-B-7 019 424.

Ici il est prévu six enroulements et six pattes 166. Bien entendu ce nombre dépend des applications et du nombre d'enroulements et de phases. Ce nombre peut être égale en variante par exemple à trois, cinq ou sept.

Les sorties des enroulements sont reliées de manière précitée aux pattes 166 du connecteur 9.

Ainsi, lorsque le rotor 40 tourne et lorsque le bobinage d'excitation du rotor est alimenté électriquement, le rotor est magnétisé et crée un courant induit du type alternatif dans les enroulements du stator 3, qu'il faut redresser en courant continu à l'aide du dispositif de redressement de courant 90.

Les queues des diodes 10, 10' sont connectées aux traces électriquement conductrices du connecteur 9 pour formation d'un pont de diodes.

Le dispositif de redressement de courant 90, ainsi que le régulateur de tension, est recouvert par le capot de protection 12 à ouvertures 16, 144, 30, 155.

Le refroidissement de cet alternateur, notamment du dispositif de redressement 90 et des enroulements du stator, est assuré par une circulation forcée d'un fluide de refroidissement, tel que de l'air. Cette circulation est crée à l'aide d'au moins un ventilateur interne 22 situé à l'intérieur du palier arrière 6, concentriquement à la jupe 161 du palier 6 qui l'entoure. Ce ventilateur 22 comprend au moins un plateau circulaire 23 accolé à une extrémité du rotor 40 ici à griffes, dont il est solidaire par exemple par soudage.

Le plateau 23 porte une série de pales 24, qui sont situées sensiblement au droit de la jupe 161 et en dessous du chignon 21.

Le ventilateur 22 aspire de l'air frais axialement à travers les ouvertures d'admission d'air 16 et 144, 30 en forme d'ouïes, du capot 12 annulaire pour que cet air refroidisse notamment le pont de diodes 10, 10' et le régulateur de tension 165. Cet air traverse ensuite la face frontale 164 du palier arrière 6 par les ouvertures d'admission d'air frais 18, pour être refoulé radialement à travers des fentes de refoulement d'air chaud 162, par les pales 24 du ventilateur 22.

Cet air refroidit également le chignon 21 implanté dans de la jupe 161 et ce en regard des fentes 162.

Compte tenu de la configuration du dissipateur 1 à ailettes 4 et des ouvertures 144, 30 du capot 12 on obtient deux flux d'air F1 et F2 comme expliqué dans le document US-B- 7 019 424 et visible à la figure 5 de celui-ci. Il existe également un flux d'air frais F3, qui passe à travers les ouvertures 16 du capot 12.

Ces flux d'air permettent de refroidir la machine électrique tournante et donc les éléments de redressement de courant ici sous forme de diode 10, 10'.

Il en est de même dans le document US 2006/0012254 conforme au préambule de la revendication1. Dans la figure 4 du document US 2007/0035188 la face frontale du palier porte des surépaisseurs.

Les températures de ces éléments 10, 10' dépendent donc de la température de la machine électrique tournante et également du courant électrique parcourant ces éléments.

D'une manière générale l'augmentation des besoins électriques des véhicules automobiles conduit à des machines électriques tournantes, telles que des alternateurs, qui doivent produire une puissance électrique de plus en plus élevée, ce qui génère une quantité de chaleur nécessitant des améliorations importantes de leur refroidissement, notamment du dispositif de redressement de courant.

Il est donc souhaitable d'améliorer le refroidissement des éléments de redressement de courant pour augmenter la puissance de la machine électrique tournante.

Il est encore souhaitable de ne pas modifier de manière profonde le dispositif de redressement de courant, tout en augmentant la puissance de la machine électrique tournante.

### Résumé de l'invention

Le but de l'invention est de répondre à ces souhaits et donc d'améliorer le refroidissement des éléments de redressement de courant sans modifier de manière profonde la conception du dispositif de redressement de courant.

Ce problème est résolu selon l'invention par la partie caractérisante de la revendication 1.

Suivant l'invention une machine électrique tournante à ventilation interne, telle qu'un alternateur ou un alterno-démarreur de véhicule automobile, est caractérisée en ce qu'elle comporte un tel palier

Grâce à l'invention le dispositif de redressement de courant comporte le même nombre de pièces et en modifiant localement le palier on améliore le refroidissement d'au moins un des composants électroniques, tels que des diodes, appartenant au dispositif de redressement de courant moyennant un surcoût de fabrication le plus faible possible.

Cette modification locale consiste en un apport de matière obtenu aisément par moulage.

La chaleur transite par la surépaisseur et est évacuée par la ou les saillies d'évacuation de chaleur.

La surépaisseur évacue principalement par conduction les calories dues à l'échauffement du ou des éléments de redressement de courant adjacents à la surépaisseur, tandis que la ou les saillies d'évacuation de chaleur, reliées à la surépaisseur, dissipent principalement par convexion les calories.

Ces saillies n'ont pas de fonction mécanique et ne servent pas à la fixation d'un élément ou d'une pièce.

Grâce à l'invention le dissipateur positif et le connecteur du dispositif de redressement peuvent être conservés.

Les ouvertures et les fentes du palier peuvent également être conservées en sorte que la ventilation interne de la machine électrique n'est pas modifiée.

La puissance de la machine peut être augmentée puisque l'on peut refroidir de manière sélective le ou les composants électroniques à température critique, c'est-à-dire la plus chaude, appartenant au dispositif de redressement de courant.

La surépaisseur permet de créer d'autres types de montage des éléments de redressement de courant.

La saillie est dans un mode de réalisation en forme de dent globalement d'orientation tangentielle par rapport à une portée de centrage que comporte à sa périphérie externe le palier pour centrer le capot.

Dans un mode de réalisation cette dent est élargie pour former un muret pour mieux évacuer encore la chaleur.

Dans un autre mode de réalisation la saillie consiste en une patte d'orientation radiale par rapport à la portée de centrage du palier.

En variante la patte est inclinée circonférentiellement.

En variante plusieurs saillies sont prévues pour mieux évacuer encore la chaleur.

On peut prévoir une solution avec des dents et des pattes.

Le capot de la machine est dans un mode de réalisation conservé.

En variante le capot de protection du dispositif de redressement de courant est modifié.

Ainsi dans un mode de réalisation le capot renferme au moins élément de redressement de courant et comporte au moins une ouverture radiale de passage d'air et au moins une cheminée de refroidissement de l'élément de redressement de courant adjacent à la jupe du capot, l'ouverture radiale de passage d'air constituant la sortie de la cheminée.

Grâce à cette disposition on augmente le flux d'air entrant par l'ouverture radiale d'entrée d'air constituant la sortie de la cheminée.

On augmente donc le flux d'air à l'intérieur du capot. Les éléments de redressement de courant, ainsi que le régulateur de tension sont ainsi bien refroidis.

La sortie de la cheminée est avantageusement implantée de manière adjacente à au moins une saillie d'évacuation de chaleur pour encore mieux refroidir le ou les éléments de redressement de courant les plus chauds.

En outre on évite à l'intérieur du capot les phénomènes de rebouclage ou de recirculation de l'air ayant été réchauffé par les constituants implantés dans le carter de la machine électrique tournante ce qui permet d'abaisser la température des éléments de redressement de courant, ainsi que le régulateur de tension. On peut donc augmenter encore la puissance de la machine électrique tournante.

Dans un autre mode de réalisation, on peut augmenter la taille axiale et/ou circonférentielle de l'ouverture radiale pour augmenter encore le flux d'air pénétrant dans le capot du fait de la présence de la cheminée.

Ainsi dans un mode de réalisation on ne modifie pas les entrées axiales d'air dans le fond du capot et on ne change pas l'agencement du ou des composants électroniques à l'intérieur du capot.

On tire partie de la jupe pour implanter de manière adjacente la cheminée, qui est économique.

Cette cheminée est décalée axialement par rapport aux fentes de refoulement d'air de sorte qu'elle n'interfère pas avec celles-ci et ne perturbe pas la ventilation interne de la machine électrique tournante.

Ainsi les éléments de redressement de courant, tel que les diodes, et/ou le régulateur de tension, bénéficient d'une température d'entrée très proche de la température ambiante et d'un flux d'air plus important.

La température des éléments de redressement de courant et/ou du régulateur de tension est alors diminuée en sorte que l'on peut augmenter la puissance de la machine électrique tournante puisque l'on diminue la température au voisinage de ce ou ces éléments et/ou du régulateur de tension.

Ces éléments et/ou le régulateur sont plus fiables. La température des dissipateurs de chaleur est également diminuée ce qui est favorable pour la diminution des pertes par effet Joule de la machine.

S'agissant d'un alternateur du type de la figure 2, on augmente le flux d'air entre le palier arrière et le dissipateur positif tout en bénéficiant d'une température très proche de la température ambiante.

Lorsque une ou deux diodes négatives sont plus chaudes que les autres on peut réaliser à l'aide d'une ou plusieurs cheminées des prises d'air dans des zones spécifiques et ce en combinaison avec la ou les surépaisseurs à au moins une saillie d'évacuation de chaleur selon l'invention.

D'une manière générale on réduit l'écart de température entre les diodes positives et négatives.

Dans un mode de réalisation toutes les entrées d'air au niveau du capot sont axiales ; l'entrée de l'air dans la cheminée étant réalisée axialement.

Dans un autre mode de réalisation il est prévu au moins une cheminée supplémentaire par exemple en regard d'une sortie de phase.

Dans un autre mode de réalisation le capot présente une tubulure perpendiculaire à la jupe du capot pour aller chercher l'air dans une zone plus froide.

Cette entrée est implantée en regard d'au moins une saillie d'évacuation de la chaleur.

La tubulure présente une entrée de forme oblongue.

Cette entrée est dans un mode de réalisation en regard de pattes que présente appartenant à la surépaisseur pour bien refroidir les saillies.

L'invention sera maintenant décrite plus en détails, et en référence aux dessins annexés qui en illustrent une forme de réalisation à titre d'exemple non limitatif.

### Brève description des figures

- La figure 1 est une demie-vue partielle en coupe d'un d'alternateur de l'art antérieur ;
- La figure 2 est une vue d'ensemble en perspective d'un palier arrière d'alternateur fabriqué par moulage axial utilisé dans l'art antérieur;
- la figure 3 est une vue en perspective d'un palier arrière d'un alternateur selon un premier mode de réalisation de l'invention :
- la figure 4 est une vue analogue à la figure 3 avec représentation du dissipateur de chaleur positif du dispositif de redressement de courant de l'alternateur ;
- la figure 5 est une vue en perspective d'un palier arrière d'un alternateur selon un second mode de réalisation de l'invention ;
- la figure 6 est une vue analogue à la figure 5 sous un autre angle ;
- la figure 7 est une vue de derrière d'un capot modifié de la machine électrique tournante pour un premier exemple de réalisation;
- la figure 8 est une vue en coupe selon ligne 8-8 de la figure 7 ;
- les figures 9 et 10 sont des vues analogues à la figure 7 pour respectivement un deuxième et une troisième modification du capot;
- la figure 11 est une vue partielle en perspective d'un alternateur équipé du palier arrière de la figure 3 et d'un capot modifié selon un quatrième exemple de réalisation ;
- la figure 12 est une vue de derrière d'un capot modifié selon un cinquième exemple de réalisation de l'invention ;
- les figures 13 à 15 sont des vues en coupe selon respectivement les lignes 13-13, 14-14, 15-15 de la figure 12 ;
- la figure 16 est une vue partielle analogue à la figure 12 pour un sixième exemple de modification du capot.

### Description détaillée de modes de réalisation de l'invention

Dans les figures les éléments identiques ou similaires seront affectés des mêmes signes de référence.

Pour la structure générale d'un alternateur, constituant une machine électrique tournante, on se reportera aux figures 1 et 2 et aux documents précités. On ne décrira ci-après que les aspects en relation avec l'invention.

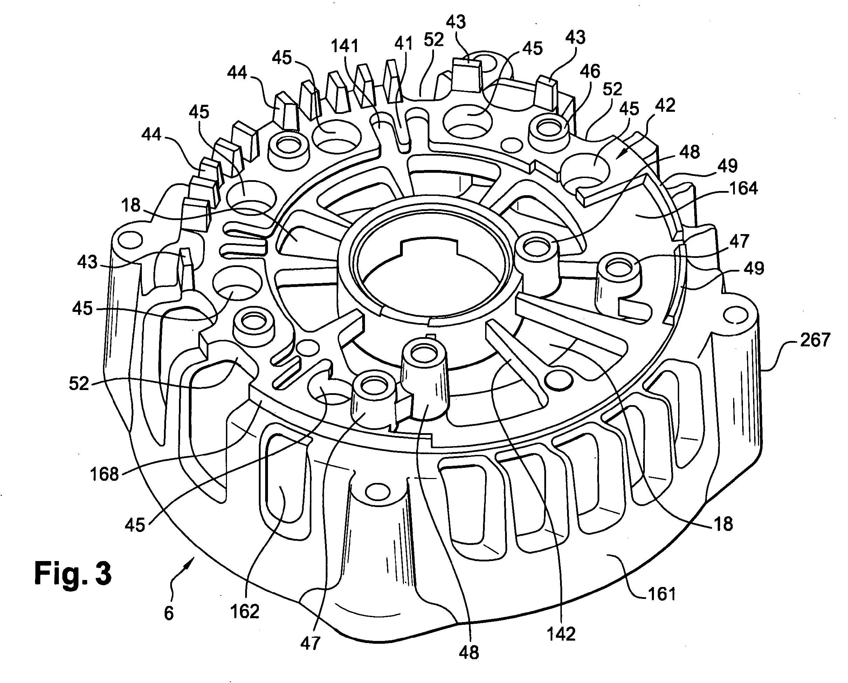

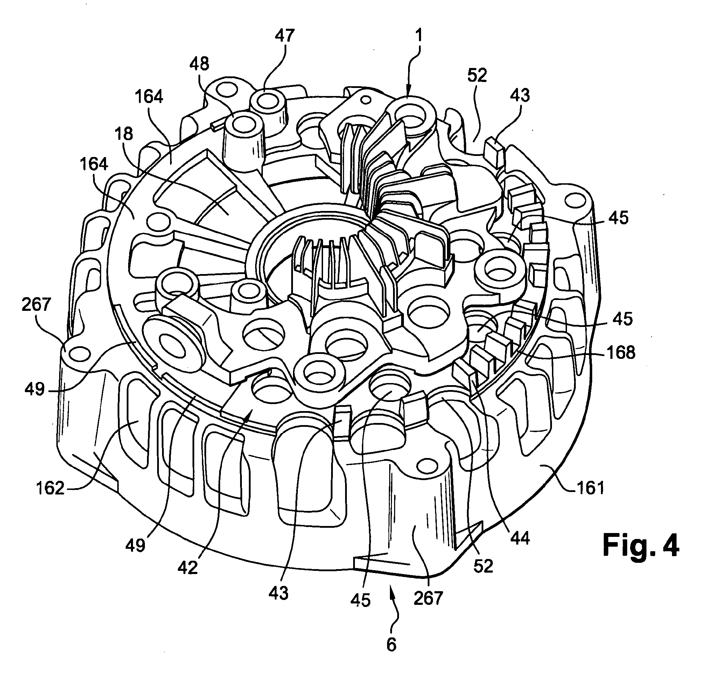

Dans le premier mode de réalisation des figures 3 et 4 on a représenté que l'un des flasques de l'alternateur à savoir le palier arrière 6 de celui-ci constituant un des dissipateurs de chaleur, à savoir le dissipateur de chaleur négatif, du dispositif de redressement de courant de l'alternateur.

Dans la figure 4 on a également représenté, sans la partie filetée de sa borne B+, le dissipateur de chaleur positif 1 à ailettes du dispositif de redressement de courant. Ce dissipateur 1, appelé également radiateur positif est ici identique à celui des figures 1 et 2.

Il est destiné à être relié à la borne positive de la batterie du véhicule fixé sur la borne B+. C'est pour cette raison que les diodes 10' de la figure 1 sont dites diodes positives, tandis que les diodes 10 sont dites diodes négatives car le palier 6 est destiné à être relié à la masse.

Pour plus de clarté on n'a pas représenté les diodes 10, 10' mais seulement les trous de montage 45 constituant les zones de montage des diodes 10, 10'.

Ainsi, comme dans les figures 1 et 2, le palier 6 présente un fond avec une face externe frontale 164 d'orientation transversale dotée de six trous 45 pour le montage des six diodes négatives, ici par emmanchement à force. De même le dissipateur 1 présente six trous non référencés, pour le montage des six diodes positives, ici par emmanchement à force.

Le palier 6 et le dissipateur 1 sont, dans cette réalisation métalliques. Dans cet exemple ils sont à base d'aluminium et obtenus par moulage.

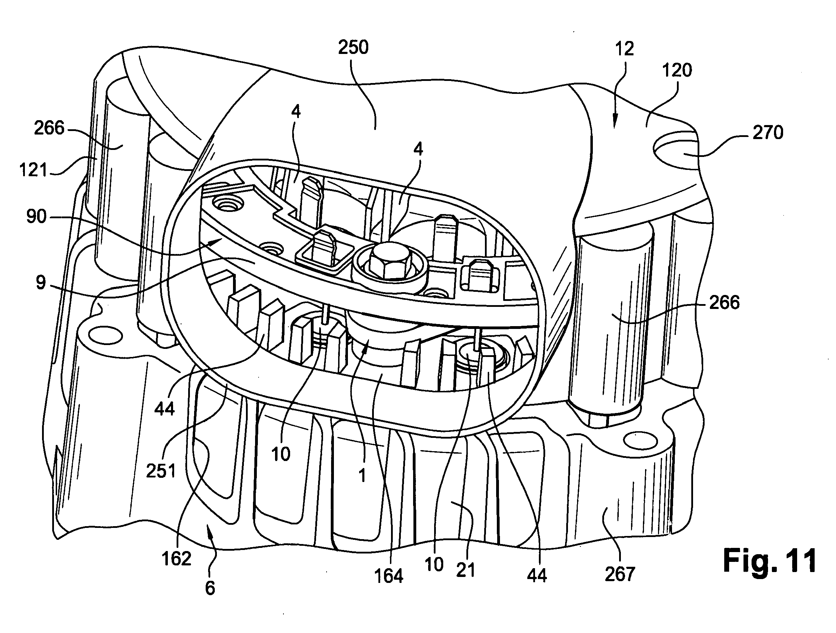

Dans cette réalisation outre le dissipateur 1, le connecteur (visible partiellement à la figure 11), le régulateur de tension et le capot sont conservés. Le dispositif de redressement de courant comporte le même nombre de pièces que dans les figures 1 et 2.

Seul le palier 6 est modifié et ce de manière non profonde. Ainsi la jupe 161 à fentes 162 et à bossages 267, les ouvertures 18, les trous 45 de montage des diodes 10, l'ouverture centrale du palier 6 et les cheminées 46, 47 et 48, d'orientation axiale, sont conservés. Ces cheminées sont taraudées.

De manière connue les deux cheminées 48 servent au montage du régulateur de tension, les deux cheminées 47 servent respectivement au montage de l'extrémité circonférentielle voisine de la borne B+ du dissipateur 1, et de l'extrémité circonférentielle du connecteur.

Les trois cheminées 46 servent au montage du dissipateur 1, doté de trois oreilles trouées (non référencées à la figure 4).

Des canons électriquement isolants à manchon sont intercalés axialement entre les extrémités libres des cheminées 46 et les oreilles du dissipateur 1. De manière connue les goujons de fixation du capot servent également à la fixation à l'aide d'écrous de l'ensemble connecteur-dissipateur 1. Pour ce faire les goujons sont vissés dans le fond du palier 6 et traversent à isolation électrique le dissipateur 1, grâce aux manchons des canons isolants.

Un autre canon isolant est prévu également au niveau de l'extrémité circonférentielle précitée du dissipateur 1 et la cheminée associée 47. La fixation est réalisée à l'aide d'une vis.

Selon une caractéristique la face frontale 164, appartenant au fond du palier 6, est dotée d'au moins une surépaisseur 42. Cette surépaisseur consiste en un apport supplémentaire de matière. Cet apport est ici obtenu par une opération de moulage du palier 6.

Dans ce mode de réalisation la surépaisseur 42 s'étend autour des trous 45 de montage des diodes négatives et des trois cheminées 46. La surépaisseur est donc adjacente ici à plusieurs trous 45. Elle permet de mieux canaliser l'évacuation de chaleur et d'augmenter le cône de diffusion de la chaleur entre la surépaisseur et le corps moleté d'une diode 10.

Il en résulte que l'épaisseur du palier est augmentée localement au niveau des trous 45 et que la hauteur des cheminées 46 est diminuée.

L'augmentation d'épaisseur permet en variante de tarauder les trous et d'équiper l'embase des diodes 10 d'une partie filetée et d'un écrou.

Les trous 45 peuvent donc être de taille réduite, la fixation des diodes étant réalisée par vissage.

On peut fixer les diodes, ou en variante un transistor MOSFET ou une puce électronique, par brasage sur la surépaisseur. La zone de montage n'est donc forcément un trou.

Le trou 45 peut être borgne. Ce trou borgne peut servir à monter une diode dotée d'une embase comprenant une partie de butée s'étendant en saillie par rapport à une partie d'emmanchement comme décrit dans le document FR 2 768 261 auquel on se reportera.

Grâce à la surépaisseur 42 on peut donc réaliser d'autres types de montage des éléments de redressement de courant sur le palier 6.

La surépaisseur 42 est ici globalement en forme de secteur annulaire. Cette surépaisseur 42 est implantée radialement entre la portée annulaire de centrage 168 et la périphérie externe de forme annulaire des ouvertures d'admission d'air 18, appelée également ouvertures d'entrée d'air, réparties de manière annulaire.

Ici la périphérie interne de la surépaisseur 42 s'étend jusqu'au voisinage de la périphérie externe d'au moins une ouvertures 18 globalement de forme trapézoïdale.

Dans cette réalisation (figure 3) la surépaisseur 42 s'étend jusqu'au voisinage de six ouvertures 18.

En variante la surépaisseur 42 est délimitée par la périphérie externe d'au moins une ouverture 18.

La périphérie interne de la surépaisseur 42 est donc adjacente à la périphérie externe d'au moins une ouverture 18.

La périphérie externe de la surépaisseur 42 est ici délimitée par la portée annulaire de centrage 168 appartenant à la périphérie externe de la face 164 et donc à la périphérie externe du palier 6. L'épaisseur de la portée 168 est donc localement augmentée. Il est également prévue deux saillies 49 en forme d'arc de cercle pour augmenter localement circonférentiellement l'épaisseur de la portée 168 respectivement au niveau de la cheminée 47, distante de la première extrémité circonférentielle de la surépaisseur 42, et au niveau de cette première extrémité circonférentielle. L'une des saillies 49 prolonge donc circonférentiellement la surépaisseur 42.

La deuxième extrémité circonférentielle de la surépaisseur est délimitée par l'autre cheminée 47.

En variante les deux saillies 49 sont confondues. En variante la périphérie externe de la surépaisseur s'étend à l'intérieur de la portée de centrage 168.

La surépaisseur 42 n'affecte pas la forme de la partie radiale des fentes 162, dont certaines sont plus étendues radialement vers l'intérieur au niveau de la face 164 que d'autres, de sorte que la surépaisseur 42 présente localement des creusures 52 en forme d'arc de cercle au niveau de certaines fentes 162 comme mieux visible à la figure 3. La portée 168 est interrompue au niveau des creusures 52.
L'épaisseur de la surépaisseur est bien entendue déterminée pour que celle-ci ne vienne pas en contact avec le dissipateur 1. On profite de l'espace présent entre la face 164 et le dissipateur 1 pour augmenter localement l'épaisseur de la face externe 164.

En considérant l'art antérieur et la partie de la face 164 non affectée par la surépaisseur, il ressort que l'épaisseur de la surépaisseur 42 est inférieure à la hauteur axiale des cheminées 46. La surépaisseur 42 entraîne, de manière précitée, une diminution de la hauteur des cheminées 46.

La surépaisseur 42 présente localement des languettes 41 ici radiales. Chaque languette 41 est délimitée par deux fentes 141. Une faible bande de matière existe entre les languettes 41 et la périphérie externe de la surépaisseur 42.

Il est prévu ici trois languettes 41, qui évacuent la chaleur par conduction.

Ces languettes délimitent quatre secteurs annulaires, à savoir deux secteurs d'extrémités et deux secteurs intermédiaires.

Chaque secteur comporte au moins un trou de montage 45, ou d'une manière générale une zone de montage d'un élément de redressement de courant.

La surépaisseur est donc adjacente à au moins une zone de montage d'un élément de redressement de courant 10, cette zone étant constituée ici par un trou 45.

Les languettes 41 s'étendent chacune globalement dans le prolongement d'un bras globalement d'orientation radiale 142 séparant deux ouvertures 18 d'entrée d'air consécutives.

Cette disposition, en combinaison avec les fentes 141, favorise un meilleur échange thermique.

En variante la surépaisseur 42 est continue.

En variante les languettes 41 sont supprimées, une large fente existant entre deux secteurs.

En variante la surépaisseur est fractionnée en quatre secteurs, les languettes 41 étant supprimées.

Toutes les combinaisons sont envisageables.

Suivant une caractéristique le palier 6 porte à sa périphérie externe au moins une saillie d'évacuation de chaleur.

Dans un mode de réalisation la saillie évacue la chaleur par convexion.

La saillie est implantée à la périphérie externe, ici de la face 164 du palier 6.

La saillie est portée par la périphérie externe de la face frontale du palier. Elle est adjacente à une partie radiale d'une fente 162.

Suivant une caractéristique la saillie est reliée à la surépaisseur.

Dans les figures 3 et 4 la surépaisseur 42, suivant une caractéristique, porte à sa périphérie externe des saillies 43, 44 d'évacuation de chaleur dirigées axialement vers l'extérieur et perpendiculairement par rapport à la face 164, c'est-à-dire parallèlement par rapport à l'axe X-X de la figure 1.

En variante les saillies sont inclinées par rapport à la face 164.

Les saillies 43, 44 consistent respectivement en des dents 43 et en des pattes 44.

Dans un mode de réalisation les dents 43 et les pattes 44 sont axialement de hauteur différente. Par exemple les dents 43 sont plus hautes que les pattes 44.

Dans un autre mode de réalisation les dents 43 et les pattes 44 ont axialement globalement la même hauteur.

Tout dépend des applications.

Les pattes 44 et les dents 43 sont implantées à la périphérie externe de la surépaisseur 42, c'est-à-dire au niveau de la portée 168 et de la périphérie externe du palier 6.

Les pattes 44 sont ici d'orientation globalement radiale et sont dirigées vers l'intérieur, c'est-à-dire vers l'axe X-X. Elles ont une épaisseur inférieure à leur longueur radiale et à leur hauteur axiale.

Les dents 43 sont globalement perpendiculaires aux pattes 44.

Elles ont une épaisseur inférieure à leur longueur circonférentielle et à leur hauteur axiale.

Les pattes 44 et les dents 43 d'évacuation de la chaleur ont ici globalement la même épaisseur.

Les dents 43 sont globalement d'orientation tangentielle par rapport à la portée annulaire de centrage 168, tandis que les pattes 44 sont d'orientation, globalement radiale par rapport à la portée 168.

Les dents 43 sont implantées à l'extérieur des zones de montage 45, ici des trous. Les dents 43 sont adjacentes à au moins une creusure 52.

En se reportant aux figures 3 et 4 on voit qu'il existe un plus grand nombre de pattes 44 que de dents 43 implantées au voisinage des creusures 52.

Les pattes 44 sont implantées au voisinage de deux trous 45 adjacents consécutifs correspondants aux trous des diodes les plus chaudes. Les pattes 44 sont implantées à l'intérieur de la partie radiale des fentes 162 normales.

Plus précisément les pattes sont implantées à l'extérieur des zones de montages 45, ici des trous 45, et il est prévu deux séries de cinq pattes 44. Chaque série de pattes est dédiée à un trou 45 pour mieux transférer la chaleur.

Les pattes 44 d'une série n'ont pas radialement la même taille. Une des pattes 44, celle la plus proche d'un trou 45 est plus courte radialement que les autres. Pour plus de précisions sur la longueur des pattes on se reportera à la figure 1.

Les pattes 44 sont implantées circonférentiellement entre deux dents 43, au nombre de trois dans les figures 3 et 4.

Les pattes 44 et les dents 43 sont radialement à distance des ouvertures d'admission d'air 18.

Elles permettent un bon passage de l'air et une bonne dissipation de la chaleur compte tenu de leur nombre.

Plus précisément dans ces figures la surépaisseur 42 en forme de secteur annulaire comporte un premier secteur avec un trou de montage 45, un deuxième secteur avec un trou de montage et une dent 43, un troisième secteur avec les deux séries de cinq pattes et deux trous de montage et un quatrième secteur avec deux dents 43 et deux trous de montage 45. Ce quatrième secteur est prolongé par la saillie 49. Ces secteurs annulaires comportent chacun au moins une zone de montage 45, ici en forme de trou et sont séparés les uns des autres par une languettes 41.

Toutes les combinaisons sont possibles. Tout dépend du ou des trous 45 correspondants aux diodes les plus chaudes. Par exemple on peut fractionner de manière précitée la surépaisseur 42 des figures figure 3 ou 4 et remplacer les dents 43 par des pattes 44, qui en variante sont dirigées vers l'intérieur en étant globalement radialement inclinées. En variante on peut supprimer les pattes 44 et fractionner la surépaisseur.

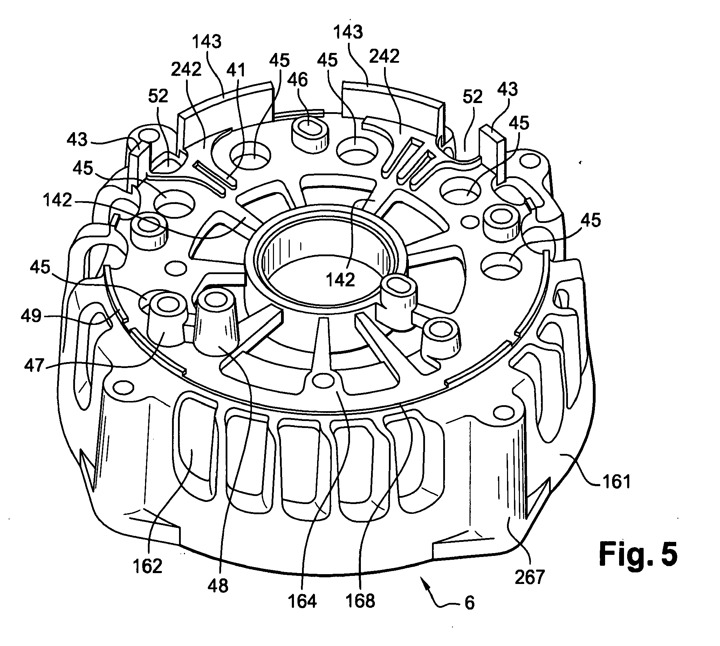

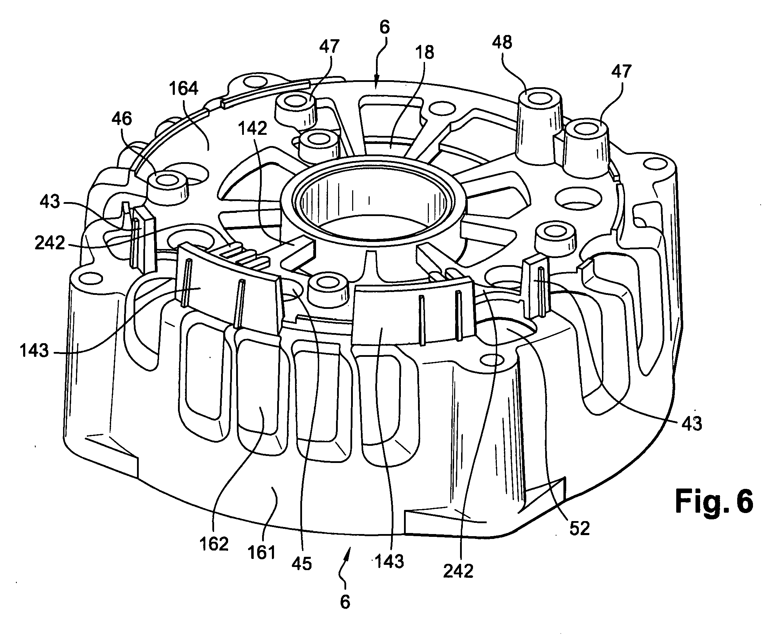

Ainsi dans un second mode de réalisation (figure 5 et 6), la surépaisseur est fractionnée en deux surépaisseurs 242 distinctes et les pattes sont supprimées. Ces pattes sont et remplacées par des dents élargies 143 d'évacuation de chaleur globalement d'orientation tangentielle par rapport à la portée annulaire 168 et saillantes axialement par rapport à la face 164. Les dents élargies 143 sont plus longues circonférentiellement que les dents 43, dont deux sont conservées dans ces figures 5 et 6.

Ces dents élargies 143 consistent en des murets en forme de secteur annulaire.

Il existe dans ce mode de réalisation deux murets 143 implantées circonférentiellement entre deux dents 43, ainsi que deux surépaisseurs 242 pour relier chacune une dent 43 à un muret 143.

Chaque surépaisseur 242 est implantée au voisinage d'une creusure 52 et s'étend radialement vers l'intérieur entre deux trous 45 consécutifs.

Les surépaisseurs 242 sont implantées donc au voisinage de deux trous c'est-à-dire de manière adjacente par rapport à deux zones de montage 45.

Chaque surépaisseur 242 comporte au moins deux languettes 41 d'orientation globalement radiale. L'une des surépaisseur 242 comporte trois languettes 41 et l'autre deux languettes 41. Les languettes sont délimitées par des fentes comme dans la figure 3. Les languettes sont implantées au voisinage des bras 142 comme à la figure 3. Les surépaisseurs 242 canalisent le transfert de chaleur vers les murets 143 et les dents 43.

Comme visible à la figure 6 les dents 43 et les murets 143 sont dans un mode de réalisation renforcés par au moins une nervure (non référencée).

On notera que les surépaisseurs 242 comportent au moins un bord arrondi. Ce bord est configuré pour le passage d'un contre-outil prenant appui sur la face 164 autour d'un trou 45. Ce contre-outil sert de contre appui ; un autre outil permettant de manière connue l'emmanchement à force du corps moleté d'une diode 10 du côté de la face interne du fond du palier opposée à la face frontale 164.

Bien entendu en variante on élargit la surépaisseur pour qu'elle serve d'appui au contre-outil, comme la surépaisseur 42 des figures 3 et 4.

Dans ces figures 3 et 4 on peut augmenter le diamètre de la surépaisseur 42 autour d'un trou pour que le contre-outil prenne appui autour du trou 45 sans interférer avec la surépaisseur 42.

En variante on peut remplacer la dent 43 des figures 5 et 6 par au moins une pattes 44 des figures 3 et 4.

En variante on peut supprimer les dents 43.

Tout dépend des applications.

Ainsi qu'il ressort de la description et des figures le palier 6 porte à sa périphérie externe au moins une saillie d'évacuation de la chaleur.

La saillie élargie, tel que le muret 143 où la dent des figures 5 et 6, est dans un mode de réalisation prolongée circonférentiellement par rapport à la surépaisseur pour déborder circonférentiellement par rapport à celle-ci.

La saillie est dans tous les cas reliée à la surépaisseur.

Le palier est doté dans les figures 3 à 6 d'au moins une surépaisseur 42, 142 implantée de manière adjacente au moins à une zone de montage, tel qu'un trou de montage 45, d'un élément de redressement de courant 10, tel qu'une diode ou en variante un autre composant électronique, par exemple un transistor du type MOSFET ou une puce.

Cette surépaisseur porte à sa périphérie externe au moins une saillie d'évacuation de chaleur, telle qu'une patte 44, une dent 43 ou une dent élargie 143 en forme de muret.

La surépaisseur peut être dotée d'au moins une languette 41 et est axialement de hauteur inférieure à celle d'une cheminée 46 de fixation du dissipateur 1.

Cette solution est économique car la surépaisseur 42, 142 à au moins une saillie 43, 44, 143 est venue de moulage avec le palier 6, ici avec la face 164 du fond de celui-ci.

La surépaisseur à au moins une saillie d'évacuation de la chaleur est locale et est implantée au moins au voisinage du ou des éléments de redressement de courant, tel que des diodes, les plus chauds. En variante la surépaisseur englobe une zone de montage d'un élément de redressement de courant.

Les calories issues de l'élément ou des éléments de redressement de courant sont, via la surépaisseur, évacuées vers l'extérieur par convexion par la ou les saillies.

La surépaisseur évacue par conduction vers la ou les saillies les calories issues des éléments de redressement de courant, tels que les diodes 10.

On peut donc, de manière simple et économique, augmenter le courant traversant les éléments de redressement de courant et donc la puissance de l'alternateur.

Le capot de la figure 2 est dans un mode de réalisation conservé, la ou les saillies 43, 44, 143 étant logées à l'intérieur du capot.

Certaines au moins des ouvertures radiales 16 sont en regard d'une saillie pour refroidissement de celle-ci

En variante une partie de la jupe 121 du capot de la figure 2 est interrompue et est remplacée par les murets 143 des figures 5 et 6. La jupe du capot présente une languettes intercalée circonférentiellement entre les deux murets 143 et deux autres languettes intercalées chacune entre un muret 143 et une dent 43 pour rétablir une continuité. Le muret 143 est ainsi à la température ambiante, car l'une de ces faces est en contact direct avec l'air ambiant.

Grâce à cette disposition dans le mode de réalisation des figures 5 et 6 on a constaté une réduction de 6° des diodes les plus chaudes.

En variante on équipe le capot d'au moins une cheminée ou d'une tubulure pour amener l'air au niveau de la ou des saillies d'évacuation de la chaleur afin de mieux refroidir celles-ci et d'éviter les phénomènes de recirculation de l'air chaud ayant traversé le palier 6 de manière décrite ci-après.

Ainsi dans les figures 7 et 8 on voit en 120 le fond et en 121 la jupe périphérique externe du capot 12 de forme globalement cylindrique.

Ce capot est ici en matière moulable.

Il est dans cette réalisation en matière plastique moulable. En variante il est en aluminium.

Le capot 12 renferme au moins un composant électronique de manière précitée. Ce capot de protection entoure donc le composant électronique monté dans le volume délimité par le fond 120 et la face frontale 164 comme dans les figures 1 et 2.

Le fond 120 est doté d'au moins une ouverture axiale d'entrée d'air, ici d'une pluralité d'ouvertures axiales d'entrée d'air 155, 144, 30 comme dans les figures 1 et 2. Par simplicité on n'a pas représenté les points de fixation 270.

La jupe 121 entoure le dispositif de redressement de courant visible à la figure 1 et présente, au niveau de son extrémité libre ouverte et adjacente à la face frontale 164 du palier 6, au moins une ouverture radiale de passage d'air 16.

Dans ce mode de réalisation, la jupe 121 présente une pluralité d'ouvertures radiales 16 de forme oblongue adjacentes à l'extrémité libre de la jupe comme à la figure 2. Ces ouvertures 16 sont fermées et décalées axialement par rapport aux ouvertures d'entrée d'air 144, 30, 155 et donc par rapport au fond 120. Une bande de matière de la jupe existe entre le bord axial externe de l'ouverture 16, le plus éloigné de l'extrémité libre de la jupe 121, et le fond 120.

Le capot 12 est dans ce mode de réalisation rapporté à fixation par encliquetage ou vissage comme dans les figures 1 et 2 sur le palier arrière.

Dans ce mode de réalisation on tire partie du décalage axial des ouvertures 16 par rapport au fond 120 et de la présence de la jupe 121.

Ainsi le capot 12 est équipé, selon une caractéristique, d'au moins une cheminée 200 de refroidissement d'au moins un composant électronique, ici une diode négative et/ou positive, qui en variante peut être remplacée par un transistor du type MOSFET ou tout autre élément électronique de redressement de courant.

La cheminée 200 est d'orientation axiale par rapport à l'axe X-X de l'alternateur. Cette cheminée est décalée axialement par rapport aux fentes de refoulement d'air et ici au carter de l'alternateur. La cheminée est donc décalée ou déportée axialement par rapport à la périphérie externe du palier arrière. Cette cheminée n'augmente donc pas l'encombrement radial de la machine au niveau de son carter et ne perturbe pas la ventilation interne de cette machine.

Cette cheminée est selon une caractéristique adjacente à la jupe 121 et permet d'augmenter le flux d'air entre la face frontale du palier arrière et le dissipateur positif 1. Ainsi les diodes ou tout autre élément électronique de redressement de courant, bénéficient d'une température très proche de la température ambiante et d'un flux d'air frais plus important. Il en est de même du régulateur de tension.

Cette cheminée est délimitée par une paroi sommitale 201, par une paroi inférieure constituée par la jupe 121 du capot 12, par une paroi extrême coudée 202 et par deux parois latérales 203, 204 globalement d'orientation axiale.

La cheminée 200 est adjacente à la jupe 121 et s'étend en saillie radiale à l'extérieur de la jupe 121.

Les parois 201 à 204 sont dans ces figures monoblocs avec le capot 12 en étant venues de moulage avec le capot 12, ici en matière plastique. La cheminée 200 constitue une protubérance d'orientation axiale et de faible épaisseur ou hauteur implantée à la périphérie externe du capot 12. La paroi 202 constitue un déflecteur profilé, qui dirige l'air radialement vers au moins une ouverture 16 associée à une diode négative et/ou positive. Cette paroi 202 s'étend en majeure partie au dessus et à l'extérieur d'au moins une ouverture 16 implantée au voisinage d'une diode négative et/ou positive pour mieux refroidir celle-ci.

Ici la paroi 202 s'étend en majeure partie au dessus au moins d'une saillie d'évacuation de la chaleur selon l'invention, c'est-à-dire en regard de la saillie portée ici par la surépaisseur.

La paroi sommitale 201 prolonge axialement la paroi 202 à l'extrémité de laquelle elle se raccorde. Cette paroi 201 s'étend axialement jusqu'au voisinage du plan du fond 120 du capot en sorte que l'encombrement axial du capot n'est pas augmenté. La paroi 201 a circonférentiellement une forme de secteur circulaire.

L'extrémité libre de la paroi 201 appartient à l'entrée de la cheminée 200, tandis que la paroi 202 constitue le fond de la cheminée et la ou les ouvertures 16, selon une caractéristique, la sortie de la cheminée.

L'ouverture 16 est délimitée en majeure partie par la jupe 121. L'ouverture 16 est borgne au niveau de la jupe 121 et est fermée par la paroi 202 moins épaisse que la portion de la paroi de la jupe de la figure 2 présente entre l'ouverture 16 et l'extrémité libre de la jupe.

On peut donc augmenter la taille circonférentielle et/ou axiale de l'ouverture 16 grâce à la présence de la cheminée. Une plus grande quantité d'air peut donc rentrer à l'intérieur du capot, notamment pour mieux ventiler par exemple les pattes 44 des figures 3 et 4.

A la figure 8 on voit qu'un léger décalage radial existe entre l'extrémité libre de la paroi 202 et la jupe 121 pour pouvoir obtenir l'ouverture 16 par exemple à l'aide d'une pièce appelée couteau que l'on escamote lors du moulage pour pouvoir obtenir l'ouverture 16.

La forme profilée, ici arrondie, de la paroi coudée 202 permet de diminuer les pertes de charge et de bien diriger l'air vers l'intérieur du capot 12. Cette forme peut être obtenu par démoulage axial.

L'air, qui circule grâce au ventilateur arrière, est canalisé par la cheminée 200. L'air rentre axialement au niveau de l'extrémité libre de la paroi 201, puis est dévié radialement par la paroi 202 pour traverser l'ouverture radiale 16 et refroidir le ou les éléments de redressement de courant concerné. Le flux passe ensuite par au moins une ouverture 18 et enfin ressort par au moins une fente de refoulement d'air. On augmente ainsi le flux d'air entre les dissipateurs 164, 1.

Grâce à cette disposition l'air, qui a été réchauffé notamment par le chignon du stator, ne risque pas de rentrer à nouveau par l'ouverture 16 masquée en majeure partie par la paroi 202 constituant le fond de la cheminée.

La cheminée 200 évite ainsi un rebouclage de l'air a travers les ouvertures 16, ainsi que les phénomènes de tourbillons. On diminue les pertes de charge. On évite donc une recirculation de l'air, qui a été réchauffé, dans le capot 12.

L'air qui traverse la cheminée 200 est donc plus frais en sorte que le ou les éléments de redressement de courant sont mieux refroidis et est plus fiables.

Il en est d'autant plus ainsi que l'air circule avec un minimum de pertes de charge dans la cheminée, la paroi 202 favorisant l'écoulement de l'air.

La courbure de cette paroi dépend des applications.

Cette disposition permet, de manière précitée, d'augmenter axialement et/ou circonférentiellement l'ouverture 16 en sorte d'amener d'avantage d'air frais sur les éléments de redressement de courant, tout en évitant un rebouclage d'air chaud en provenance des fentes de sortie d'air.

Dans la figure 7 la cheminée recouvre plusieurs ouvertures 16 et est associée à plusieurs éléments de redressement de courant.

La cheminée 200 recouvre également au moins une sortie de phase visible en 166 à la figure 1 et implantées au voisinage chacune d'une diode négative 10.

La cheminée 200 a, selon une caractéristique, une longueur circonférentielle supérieure à sa hauteur radiale pour diminuer l'encombrement radial.

Cette cheminée ne recouvre pas la jupe du palier arrière 6. Elle s'étend axialement entre le fond 120 du capot et la face frontale 164 du palier 6.

Cette cheminée est obtenue de manière économique par moulage et permet de conserver tous les constituants de l'alternateur, notamment le dispositif de redressement de courant 90.

Dans cette figure 7 on prévoit deux cheminées 200. Les cheminées 200 sont globalement diamétralement opposées et circonférentiellement de même longueur.

En variante les deux cheminées sont circonférentiellement de longueur différente.

Dans la figure 7 il est prévu en réalité deux autres cheminées 260 diamétralement opposées, de longueur circonférentielle supérieure à celle des cheminés 200. Les cheminées 200, 260 s'étendent sur 360° et réalisent donc un tour complet. Ces cheminées 200, 260 sont séparées et rattachées les unes aux autres par les cloisons 203, 204 globalement d'orientation axiale. Le régulateur de tension est ainsi bien refroidi.

La périphérie externe du capot est donc constituée de cheminées adjacentes à la jupe 121 constituant la paroi interne des cheminées 200, 260.

En variante on peut à la figure 7 conserver que deux cheminées 200 ou 260.

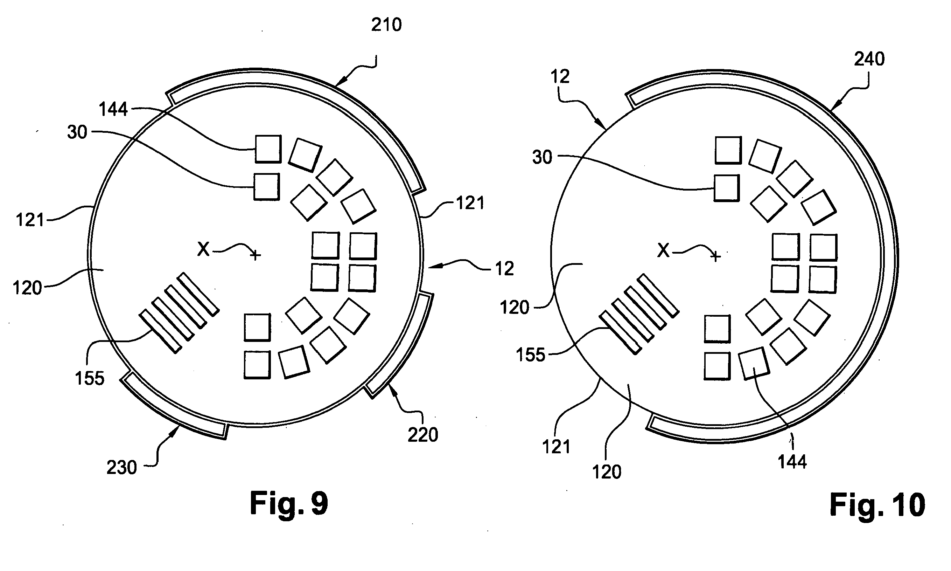

Dans le mode de réalisation de la figure 9 on prévoit trois cheminées 210, 220, 230 d'orientation axiale à paroi sommitale circonférentiellement en forme de secteur circulaire. La cheminée 210 est ici de longueur circonférentielle supérieure à celle des autres cheminées.

On peut bien entendu prévoir quatre cheminées ou plus de quatre cheminées et/ou faire varier la longueur circonférentielle des cheminées.

Ainsi dans le mode de réalisation de la figure 10 il est prévu une seule cheminée 240, qui englobe les trois cheminées de la figure 6. Cette cheminée s'étend sur plus de 180°.

Le nombre de cheminées dépend donc des applications et également notamment du nombre des diodes négatives qui sont plus chaudes. De même l'épaisseur des parois latérales 203, 204 dépend des applications.

Il ressort des figures 7, 9 et 10 que l'on crée des prises d'air dans des zones spécifiques en fonction notamment du nombre de diodes négatives, qui sont plus chaudes et donc en fonction de ou des surépaisseurs 42, 242 et des saillies.

En pratique on place la ou les sorties 16 des cheminées aux endroits les plus chauds, notamment au niveau des diodes négatives et des sorties de phase.

La ou les sorties 16 sont agencées par exemple au niveau des saillies 43, 44 d'évacuation de la chaleur des figures 3 et 4, c'est-à-dire en regard de celles-ci.

Bien entendu, dans certaines applications on peut boucher certaines au moins des ouvertures 16 implantées en dehors de la ou des cheminées.

On peut prévoir une cheminée supplémentaire au niveau des ouvertures 155 et donc du régulateur de tension consistant en un composant électronique.

Grâce à la ou les cheminées d'air on augmente le débit d'air passant sous le dissipateur positif et on diminue la température des éléments de redressement de courant et/ou du régulateur de tension puisque l'on évite les phénomènes de rebouclage de l'air réchauffé, notamment par le chignon du stator de l'alternateur, et conduisant à une augmentation de la température.

On peut inverser les structures. Par exemple à la figure 7 la paroi externe des cheminées est en variante constituée par la jupe 121 du capot et la paroi interne par une paroi supplémentaire raccordée à la jupe périphérique par les parois latérales 203, 204.

La ou les cheminées sont donc dans ce cas adjacentes à la jupe 121 en étant implantée à l'intérieur du capot.

Dans les figures 7 à 10 la ou les cheminées sont d'orientation axiale par rapport à l'axe X-X de l'alternateur

En variante, comme visible à la figure 11 on peut remplacer la ou les cheminées par une tubulure 250 s'étendant perpendiculairement à l'axe X-X et à la jupe 121.

Dans cette réalisation la tubulure 250 présente une large entrée d'air 251 de forme oblongue. Cette entrée 251 est délimitée par deux bords parallèles raccordés à chacune de leurs extrémités par un bord comportant des zones arrondies.

La tubulure 250, ici de forme oblongue, permet d'amener l'air plus frais directement au niveau des pattes 44 d'évacuation de la chaleur de la figure 3 et du connecteur 9. Ce mode de réalisation à pattes 44 et à dents (non visibles à la figure 11) permet dans ce mode de réalisation une meilleur circulation de l'air et une meilleur évacuation de la chaleur que si l'on avait utiliser le mode de réalisation des figures 5 et 6.

On voit dans cette figure également le corps électriquement isolant et quatre pattes constituant les extrémités dénudées de traces électriquement conductrices (non référencées) du connecteur 9 pour liaison électrique du connecteur respectivement à deux queues de diodes positives et à deux queues de diodes négatives 10 emmanchées à force, via leur embase moletée, dans les trous de montage du fond du palier 6.

On voit également quatre ailettes 4, une oreille du dissipateur positif 1 et un canon isolant.

Dans ce mode de réalisation on peut supprimer au moins une des séries d'ouvertures 144, 155 des figures 7, 9 et 10.

Dans un mode de réalisation on supprime les ouvertures 144 et 155 des figures 7, 9 et 10.

On implante la tubulure 250 pour aller chercher de l'air dans une zone plus fraîche.
La tubulure 250 empêche les phénomènes de recirculation de l'air chaud

Dans les figures 7 à 11 on ne recouvre pas la partie axiale des fentes 162

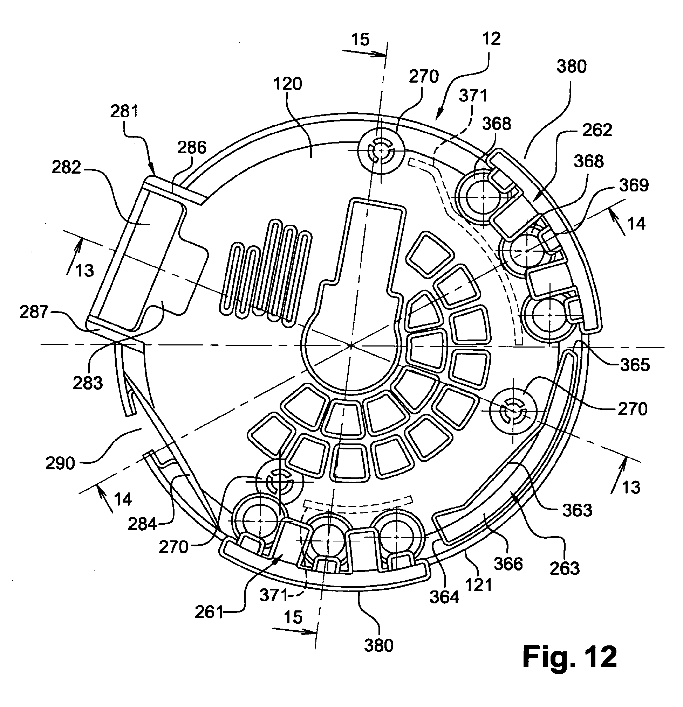

Bien entendu on peut donner la forme voulue aux ouvertures 16 et à la ou les cheminées comme visible dans les figures 12 à 15 pour amener l'air de manière encore plus précise, de préférence au niveau d'au moins une saillie d'évacuation de l'air selon l'invention. De même on peut inverser les structures de manière précitée, la paroi sommitale d'au moins une cheminée appartenant à la jupe 121 du capot comme visible également dans ces figures 12 à 15.

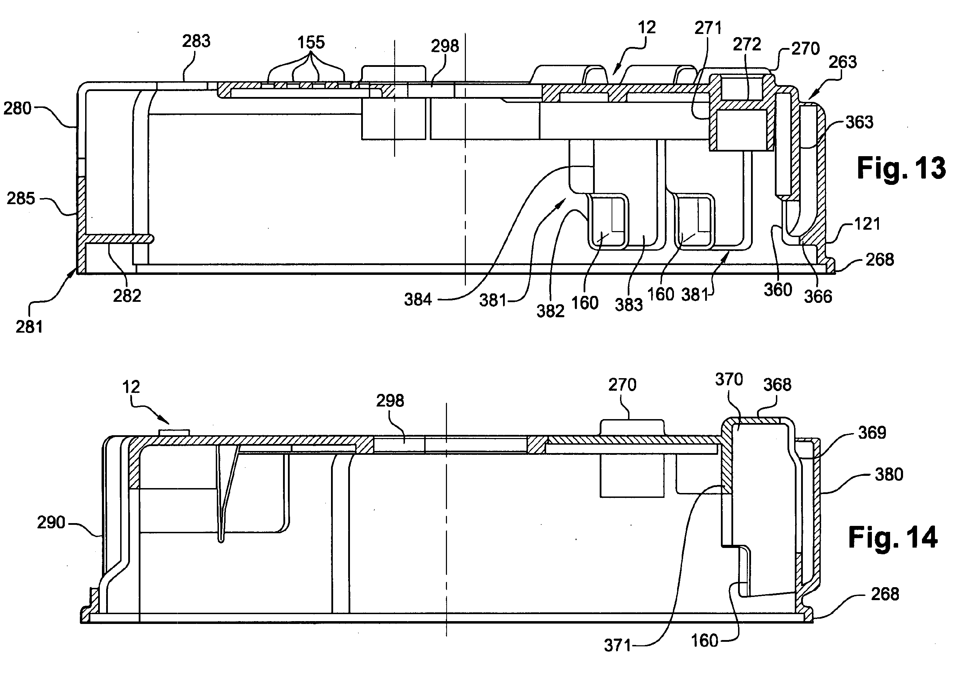

Dans la figure 12 on voit en 270 l'un des trois points de fixation du capot à languettes élastiquement déployables pour montage par encliquetage sur des goujons solidaires du palier arrière comme dans le document WO 01/69762. De manière connue la partie filetée du goujon pénètre dans l'ouverture centrale du point 270 pour venir en prise par son filetage avec l'extrémité libre des languettes. La position des points de fixation 270 dépend des applications. Ces points 270 comportent un manchon 271 pénétrant axialement dans le capot et faisant saillie axiale à l'extérieur du fond 120 du capot (figure 13). Ce manchon est doté intérieurement des languettes 272. Le manchon rigidifie le fond 120.

On voit également dans cette figure 13 en 280 une ouverture périphérique ménagée dans une saillie radiale 281 du capot pour montage du connecteur associé au régulateur de tension référencé en 165 à la figure 2.

La saillie 281 présente une paroi sommitale 285 (figure 13) et (figure 12) deux parois latérales 286, 287.

La référence 290 désigne une ouverture pour la borne B+ portant la référence 500 à la figure 1.

La taille de l'ouverture 290 dépend de la taille de la borne B+.

L'ouverture centrale 298 est destinée au passage du porte-balais de l'alternateur et est configurée en conséquence.

L'extrémité libre de la jupe 121 du capot présente un changement de diamètre pour formation d'un rebord annulaire épaulé 268. Le rebord 268, de plus grand diamètre que celui de la jupe 121, présente une partie d'orientation axiale, dont la périphérie interne est destinée à coopérer de manière intime avec la périphérie externe de la surépaisseur annulaire de centrage 168 de la figure 2. Le rebord 268 se raccorde à la jupe 121 à la faveur d'un épaulement transversal 269 destiné à venir en appui contre la face frontale délimitant la portée de centrage 168 implantée en dessous des fentes 162 au voisinage de celles-ci. L'air ne peut donc pas pénétrer dans le capot au niveau du rebord 268.

Suivant une caractéristique, comme visible dans les figures 12 et 13, la saillie 281 présente une cloison interne d'orientation transversale 282 voisine de l'extrémité libre de la jupe 121.

Dans ce mode de réalisation, contrairement au mode de réalisation de la figure 1, le connecteur associé au régulateur de tension se monte radialement. L'ouverture 280 affecte la paroi sommitale 285 de la saillie 281 et est prolongée par une découpe 283 en forme de T perpendiculaire à l'ouverture 280. La base transversale du T constitue une découpe qui affecte le fond 120 du capot. La partie horizontale du T affecte la saillie 281 et est délimitée par les bords latéraux 286, 287 de la saillie 281. La découpe 283 dans le fond 120 tient compte de la forme du connecteur (non visible). La découpe 283 et l'ouverture 280 permettent d'obtenir la cloison 282 par démoulage axial.

La cloison 282 a ici une forme rectangulaire, un faible espace existant entre la cloison 282 et les bords latéraux 286, 287 de la saillie 281 pour obtention de la cloison 282 par démoulage axial. La cloison 282 est solidaire de la paroi sommitale 285 de la saillie interrompue par l'ouverture 280 comme visible à la figure 13. La hauteur de la cloison 282 est fonction de la hauteur de la partie horizontale de la découpe 283.

Bien entendu le rebord 268 est interrompu au niveau de la saillie 281 mais cela est compensé par la présence de la cloison 282, qui selon une caractéristique, empêche l'air de passer axialement. Cette cloison empêche une pénétration dans le capot de l'air provenant de la partie radiale des fentes 162 en vis-à-vis.

Une recirculation de l'air chaud en provenance du palier arrière, notamment des fentes 162 de celui-ci, est empêchée en sorte que le régulateur de tension est protégé.

Le rebord 268 est interrompu également au niveau de l'ouverture 290.

La jupe 121 présente à cet endroit un méplat 284 pour réduction de l'encombrement. Ce méplat s'étend jusqu'au fond 120 du capot et s'arrête à faible distance du rebord 268.

Dans cette réalisation il est prévu trois cheminées 261, 262, 263 adjacentes à la jupe 121. Plus précisément la paroi sommitale de chaque cheminée est adjacente à la jupe 121, voir confondu avec la jupe en ce qui concerne la cheminée 263. Les cheminées s'étendent au moins en majeure partie à l'intérieur de la jupe 121.

Les cheminées 261 et 262 ont globalement la même forme et sont implantées au niveau des six sorties des enroulements des phases du bobinage du stator.

La cheminée 263 est de forme oblongue et est plus longue circonférentiellement que les cheminées 261, 262 implantées de part et d'autre de la cheminée 263.

Cette cheminée 263 amène de l'air frais au niveau dès saillies 43,44 des figures 3 et 4.

Suivant une caractéristique la paroi sommitale de la cheminée 263 est constituée par la jupe 121 du capot ce qui permet de ne pas augmenter l'encombrement radial du capot 12.

La cheminée 263 est de largeur réduite au niveau du point de fixation 270 adjacent à la cheminée 263 (figure 12). Cette cheminée 263 est délimitée par une paroi interne 363 issue du fond 120 du capot et constituée par une pluralité de tronçons rectilignes comme visible à la figure 12 pour ne pas interférer avec le point 270 et augmenter la largeur circonférentielle de la fente 263. La cheminée 263 est délimitée également par deux paroi latérales 364, 365 d'orientation axiale, qui se raccordent à la paroi 363 et à la jupe 121. La paroi 365, la plus proche du point 270, est moins haute que la paroi 364.

Ces parois 364, 365 se raccordent au fond 120 et s'étendent axialement à l'intérieur du capot. Les parois 364, 365 rigidifient la jupe 121 et le fond 120 du capot.

Le fond 366 de la cheminée 263 forme un pont entre les parois 364, 365. Ce fond 366 rigidifie la jupe 121 et est adjacent au rebord 268. Il a une forme profilée pour dévier l'air vers l'intérieur du capot 12. La périphérie interne du fond 366 est constituée par une pluralité de tronçons rectiligne de dimension adaptée à ceux de la paroi interne 363 de la cheminée 263 pour pouvoir obtenir le fond 363 par démoulage axial. La sortie d'air 360 (figure 13) pour le flux d'air traversant la cheminée 263 est donc circonférentiellement de grande taille. Cette taille est nettement supérieure à celle des ouvertures 16 de la figure 2.

Chaque cheminée 261, 262 est associée à trois sorties d'enroulement de phase ; l'alternateur comportant un connecteur à six pattes de manière précitée.
Ces sorties sont montées chacune dans un logement 370 d'orientation axiale.

Il est prévu ainsi deux groupes de trois logements 370 implantés de part et d'autre de la cheminée 263.

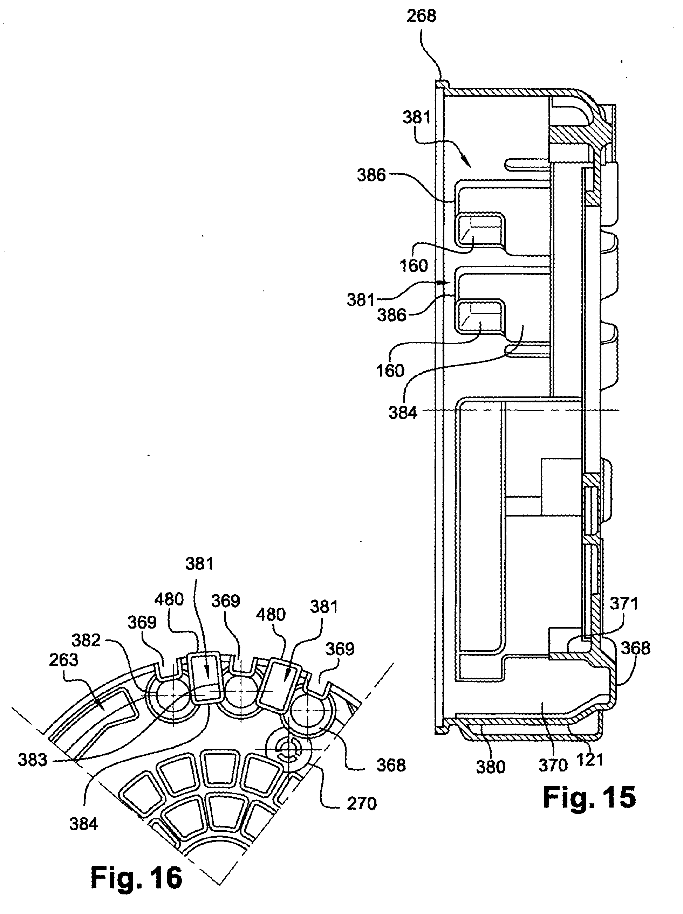

Ces logements 370 présentent chacun un fond 368 de section circulaire formant une protubérance externe par rapport au fond 120 du capot comme visible dans les figures 14 et 15.

La paroi sommitale de ces logements 370 est constituée par la jupe 121 du capot 12.

Cette paroi sommitale est munie d'une fente borgne 369 d'orientation axiale mieux visible à la figure 14. La fente est ouverte au niveau du fond 368 du logement 370 et fermée à distance du bord 268. La fente 369 est une fente d'évacuation notamment de l'eau.

Le logement 370 est délimité par une paroi interne 371 s'étendant en saillie axiale à partir du fond 120 du capot 12. La paroi 371 s'étend à l'intérieur du capot 12 sur une faible longueur axiale par rapport à la longueur axiale de la jupe 121. Cette paroi 371 rigidifie le fond 120 du capot.

La paroi interne 371 est dans un mode de réalisation commune aux trois logements 370 de la cheminée 262 comme visible en pointillés à la figure 12. Cette paroi 371 s'étend en dessous de la cheminée 262 de manière tortueuse jusqu'au voisinage du point 270 le plus haut de la figure 12. La paroi 371 est commune à deux des logements de la cheminée 261 à cause de la présence du point de fixation 270 adjacent à l'un des fonds 368 (figure 12).

La paroi interne 371 s'étend donc circonférentiellement entre au moins deux fonds 368 et permet de guider l'air. Elle s'étend en dessous de la cheminée concernée sur une plus faible longueur axiale que celle-ci.

Les logements 370 sont obtenus par démoulage axial de l'intérieur du capot 12, c'est-à-dire en direction de l'extrémité libre de la jupe, contrairement aux cheminées 261 à 263, qui sont obtenus par démoulage axial en sens inverse c'est à dire vers l'extérieur du capot 12.

Les cheminées 261, 262 sont délimitées chacune par une paroi externe 380 coiffant les trois fentes 369 et les trois logements 370. La paroi 380 s'étend à partir du fond 120 jusqu'au voisinage du bord 268 de la jupe.

La paroi 380 est saillante radialement par rapport à la jupe 121 mais ce sur une faible hauteur comme visible à la figure 12. Cette paroi externe 380 consiste ici en une surélévation locale de la jupe 121.

Chaque cheminée 261, 262 comporte également deux conduits 381 d'orientation axiale présentant chacun une sortie 160 à l'intérieur du capot 12 comme mieux visible dans les figures 13 à 15. Les conduits rigidifient la jupe 121 et le fond 120 du capot 12.

Les sorties 160 sont décalées axialement en direction du rebord 268, et donc de l'extrémité libre de la jupe 121, par rapport à la paroi 371.

Les conduits 381 s'étendent à l'extérieur de la paroi 371 et entre deux logements 370. Les parois latérales 382, 383 (figure 13) des conduits constituent les parois latérales de deux logements consécutifs 370 entre lesquels le conduit 381 est intercalé.

La paroi interne 384 du conduit 381 s'étend depuis le fond 120 du capot 12 jusqu'au bord de l'ouverture 160 avec un décalage radial des bords de l'ouverture 160 et de la paroi 384 nécessité par la présence d'une partie du moule, appelée couteau permettant d'obtenir l'ouverture 160 lors du démoulage.

L'extrémité 386 (figure 15) du conduit constitue le fond du conduit 381.

Les parois latérales 382, 383 extrêmes des deux conduits remontent jusqu'à la paroi 380 constituant un surélévation locale de la jupe 121.

Bien entendu, en variante, chaque conduit présente une paroi sommitale distincte entre deux logements 370 consécutifs. La section du conduit est globalement rectangulaire.

Les parois internes des cheminées 261 à 263 s'étendent toutes axialement à l'intérieur du capot et rigidifient le capot.

On notera que les parois latérales 382, 383 des conduits 381, ainsi que les parois latérales 384, 385 de la cheminée 263, se raccordent au fond 120 du capot 12 et à la périphérie interne de la jupe 121.

Les parois internes des conduits 381 et de la cheminée 263 se raccordent au fond 120 du capot.

Ces parois latérales et internes rigidifient le fond du capot et la jupe du capot.

La face interne du fond 120 du capot est nervurée notamment au niveau des bandes de matière entre les ouvertures 144, 30 pour augmenter la résistance mécanique du capot. Un encadrement à nervures est prévu au niveau des ouvertures 155. De même le bord de l'ouverture 298 est nervuré. Ces nervures de la face interne du fond 120 sont visibles dans les figures 13 à 15 et ne sont pas référencées pour plus de clarté.

On appréciera que le capot 12, ici en matière plastique, est aisément obtenu par démoulage axial.

Ce capot est compact et est très robuste grâce notamment aux parois des cheminées 261 à 263, aux parois 371 et aux nervures permettant de réduire la quantité de matière du capot et donc le coût de celui-ci.

On appréciera que la paroi 380 recouvre les fentes 369 des logements et protège celles-ci.

A la figure 12 les cheminées 261, 262 sont des cheminées à deux conduits 381. Bien entendu le nombre de conduits 381 dépend du nombre d'enroulements et du nombre de phases du stator. Ainsi en variante il est prévu huit sorties d'enroulements ; le nombre de phases pouvant être égal à quatre ou huit. Dans ce cas on peut prévoir deux cheminées à quatre sorties d'enroulements associés à trois conduits 381. On peut prévoir trois séries de deux sorties d'enroulements et donc trois cheminées avec deux logements 370 séparés par un conduit 381.

Bien entendu on peut modifier les cheminées de la figure 12 pour que celles-ci ne comportent que deux conduits pour trois logements à fentes 369 comme visible à la figure 16.

Dans ce cas les fentes 369 sont à l'air libre et chaque conduit présente sa propre paroi sommitale 480 constituée par une surélévation locale de la jupe 121.

Le nombre de cheminées totales est alors égale à cinq à savoir la cheminée 263 et les quatre conduits 381.

Il ressort de ce qui précède qu'on peut implanter les cheminées ou les conduits pour que ceux-ci débouchent par leur sortie 160 aux endroits les plus chauds pour mieux refroidir le ou les composants électroniques.

Les cheminées et/ou les conduits sont ainsi configurés pour déboucher au niveau de ou des surépaisseurs 42, 242 à saillies 43, 44, 143.

Avantageusement les extrémités 386 des conduits 381, le fond 366 de la cheminée 263 et la cloison 282 sont dans le même plan transversal.

En variante on peut relier entre eux les fonds 366, les extrémités 386 et la cloison 282 disposés dans le même plan par une bande de matière pour constituer une collerette d'orientation transversale remplaçant le rebord 268. La collerette peut se fixer sur les bossages 267 à l'aide des tirants 302 ou par encliquetage en sorte que l'on peut supprimer les points de fixation 270.

Bien entendu en variante on peut conserver les points de fixation 270. En variante la collerette n'est pas circulairement continue.

Bien entendu la présente invention n'est pas limitée aux exemples de réalisation décrits.

La jupe du capot est en variante dotée de pattes d'encliquetage à crochet pour venir en prise avec le bord de la partie radiale d'une fente 162 est réaliser une fixation par encliquetage comme décrit par exemple dans le document US 5 315 195 auquel on se reportera.

Les points 270 ne sont donc pas obligatoires.

Le capot 12 des figures 12 à 16 est dans une variante dépourvu de cheminée et/ou de cloison 282, les fentes borgnes 369 étant conservées.

Suivant la température des composants à l'intérieur du capot on peut prévoir une seule cheminée et une seule ouverture 16, 160 radiale de sortie d'air de la cheminée pour refroidir le composant le plus chaud.

On peut décaler radialement la ou les cheminées de refroidissement vers l'intérieur ou l'extérieur. Par exemple dans le mode de réalisation des figures 12 à 16 on peut décaler vers l'extérieur les parois sommitales et inférieures des cheminées en sorte que les parois internes des cheminées soient constituées par un enfoncement local ou une surélévation locale de la jupe 121, voir la jupe 121 elle même.

Dans les figures 12 et 16 les parois sommitales 380, 480 respectivement des cheminées 261, 262 et des conduits 381 sont formées par une surélévation locale de la jupe 121. En variante on peut réaliser un décalage vers l'intérieur en sorte que les parois sommitales 380, 480 soient constituées par un enfoncement local de la jupe 121 ou la jupe elle même.

Le décalage vers l'extérieur est en variante plus important en sorte que dans un mode de réalisation la cheminée peut s'étendre en saillie radiale par rapport à la face 164 tout en étant déportée ou décalée axialement par rapport à la périphérie externe du palier 6 à fentes 162 .

On peut faire varier également le diamètre de la jupe par rapport au diamètre externe de la face 164 du palier 6. Ce diamètre de la jupe peut donc être inférieur, égal, voir supérieur au diamètre externe de la face 164.

Bien entendu pour des raisons de démoulage on peut prévoir des dépouilles au niveau des parois d'une cheminée de refroidissement.

L'entrée de la ou des cheminée est en variante évasée pour une meilleur entrée de l'air.

On peut en variante incliner la ou les cheminées.

Ainsi la paroi sommitale de la cheminée est dans un mode de réalisation inclinée ; par exemple de forme tronconique.

La cheminée peut être inclinée par rapport à la direction axiale.

Dans les modes de réalisation décrits plus haut et représentés sur les figures, l'invention est appliquée à un palier arrière d'alternateur, sur lequel est monté le dispositif de redressement 90 qui constitue la partie la plus chaude de l'alternateur.

En variante le dispositif de redressement peut être porté par le palier avant de l'alternateur comme décrit par exemple dans le document FR 2 744 575, auquel on se reportera, en sorte que l'invention s'applique également au palier avant d'un alternateur, qui en variante est sans balais et est doté d'une pompe centrifuge comme décrit dans ce document.

L'invention s'applique également au cas d'un alternateur dans lequel l'un des paliers est refroidi par eau, et l'autre par air. Le carter de l'alternateur peut comporter plus de deux parties, par exemple trois parties, à savoir un palier avant, un palier arrière et une partie intermédiaire implantée entre les deux paliers et fixée à ceux-ci, par exemple par vissage.

L'invention s'applique par ailleurs aux machines électriques tournantes pourvues de manière générale d'un convertisseur de courant, qu'il s'agisse d'un dispositif de redressement de courant, appelé pont redresseur, comme dans les modes de réalisation présentés plus haut, ou d'un dispositif de type hacheur ou onduleur, ce qui correspond par exemple au cas d'un alterno-démarreur auquel s'applique également l'invention. L'onduleur de l'alterno-démarreur du document WO 01/69762 est en variante intégré dans un capot selon l'invention.

Les diodes 10, 10', constituant des éléments de redressement de courant, peuvent être remplacées par des transistor du type MOSFET ou autre.

Le dissipateur positif 1 peut avoir une autre forme et consister par exemple en une plaque trouée pour passage d'un ou plusieurs flux d'air axiaux. Avantageusement on prévoit des ailettes sur cette plaque pour mieux évacuer la chaleur. Les ailettes 4 ne sont donc pas forcément implantées à la périphérie interne du dissipateur positif 1.

Grâce à l'invention on peut conserver le rotor, le stator bobiné, le ou les ventilateurs et les autres composants de la machine électrique tournante. Ainsi cette machine est en variante équipée d'un ventilateur arrière 22 composé d'au moins deux ventilateurs superposés comme décrit par exemple dans le document FR 2 855 672. Des aimants permanents peuvent être montés entre les dents des roues polaires du rotor à griffes. Le nombre de phases de la machine électrique tournante peut être quelconque.

Bien entendu on peut ne pas modifier les fentes de refoulement d'air 162 et les ouvertures d'entrée d'air 18 des paliers avant et arrière car la ou les cheminées sont décalées axialement par rapport aux jupes des paliers.

Le refroidissement de la machine électrique à ventilation interne n'est donc pas modifié au niveau des fentes 162 et on n'augmente pas l'encombrement radial au niveau des jupes des paliers

On crée une ou des cheminées de refroidissement.

La sortie de la cheminée peut être implantée à l'intérieur de la jupe comme dans les figures 12 à 16. Tout cela dépend des applications.

La solution selon l'invention permet de réaliser de nombreuses formes de réalisation, est économique et permet d'augmenter la puissance et la fiabilité de la machine électrique tournante grâce à un meilleur refroidissement du ou des composants électroniques.

La forme des capots des figures 7 à 16 permet également l'élimination des phénomènes de recirculation de l'air chaud.

Grâce à la ou aux surépaisseurs on peut augmenter la surface de contact entre les éléments de redressement de courant, tels que des diodes, et le palier avant ou arrière concerné. On peut réaliser d'autres montages des éléments de redressement de courant sur le palier avant ou arrière concerné.

Ainsi qu'il ressort de la description et des dessins, la ou les surépaisseurs permettent de transférer par conduction les calories engendrées par les éléments négatifs de redressement de courant vers la ou les saillies, qui sont des saillies d'évacuation de la chaleur par convexion. Les languettes 41 permettent également un bon transfert de chaleur.

Le nombre de saillies dépend des applications.

Ces saillies ont ici une extrémité libre dépourvu de contact mécanique avec un élément ou une pièce quelconque.

Les saillies d'évacuation de chaleur sont portées par la périphérie externe du palier, ici par la périphérie externe du fond du palier.

Les saillies sont implantées à l'extérieur d'une circonférence passant par le centre des trois cheminées 46. Ces saillies sont implantées de manière adjacente à la partie radiale des fentes 162 affectant la face frontale 164 du fond du palier.

En variante le palier ne comporte pas de fentes 162, notamment lorsqu'il est de forme plate.

Dans tous les cas les saillies sont implantées à la périphérie externe du palier et de la ou les surépaisseurs et sont reliées à la surépaisseur. Ces saillies, implantées à la périphérie externe de la ou les surépaisseurs peuvent être élargies pour déborder circonférentiellement par rapport à la surépaisseur.

Ainsi le palier avant ou arrière est, d'une part, doté d'au moins une surépaisseur implantée de manière adjacente au moins à une zone de montage d'un élément de redressement de courant (10) et d'autre part, porte à sa périphérie externe au moins une saillie d'évacuation de chaleur reliée à la surépaisseur.

## Revendications

1. Palier (6) pour machine électrique tournante à ventilation interne, tel qu'un alternateur de véhicule automobile, dotée d'un dispositif de redressement de courant (90) comprenant un dissipateur de chaleur constitué par le palier (6) muni de zones de montage (45) des éléments de redressement de courant, telles que des trous de montage, d'éléments de redressement de courant (10), et portant à sa périphérie externe au moins une saillie d'évacuation de la chaleur (43, 44, 143), **caractérisée en ce qu'**il est doté d'au moins une surépaisseur (42, 242) implantée de manière adjacente au moins à une zone de montage (45) d'un élément de redressement de courant (10) et **en ce que** la saillie d'évacuation de chaleur (43, 44, 143) est reliée à la surépaisseur (43, 44, 143).

2. Palier selon la revendication 1 **caractérisé en ce que** ladite saillie d'évacuation de la chaleur (43, 44, 143) est portée par la périphérie externe de la surépaisseur (42, 242).

3. Palier selon la revendication 1 ou 2, **caractérisé en ce qu'**il comporte une face frontale (164) présentant des ouvertures d'admission d'air (18) et **en ce que** la périphérie interne de la surépaisseur (42, 242) est adjacente à la périphérie externe d'au moins une ouverture d'admission d'air(18).

4. Palier selon l'une quelconque des revendications précédentes, **caractérisé en ce qu'**il comporte une face frontale (164) présentant à sa périphérie externe une portée de centrage (168) pour un capot (12) et **en ce que** la périphérie externe de la surépaisseur (42, 242) est délimitée par la portée de centrage (168).

5. Palier selon l'une quelconque des revendications précédentes, **caractérisé en ce qu'**il présente une face frontale (164) présentant des ouvertures d'admission d'air (18) séparées deux à deux par des bras (142) globalement d'orientation radiale et **en ce que** la surépaisseur (42, 242) présente au moins une languette (41) s'étendant globalement dans le prolongement d'un bras (142).

6. Palier selon l'une quelconque des revendications précédentes, **caractérisé en ce qu'**il présente une face frontale (164) et **en ce que** la saillie (43, 143, 44) est perpendiculaire à la face frontale (164).

7. Palier selon l'une quelconque des revendications 1 à 6, **caractérisé en ce qu'**il présente une face frontale (164) et **en ce que** la saillie (43, 143, 44) est inclinée par rapport à la face frontale (164).

8. Palier selon la revendication 6 ou 7, **caractérisé en ce que** la saillie consiste en une patte (44) d'orientation radiale implantée à la périphérie externe de la surépaisseur (42), **en ce que** la patte (44) présente une épaisseur inférieure à sa longueur radiale et **en ce qu'**il comporte au moins une série de pattes (44) associées à une zone de montage (45).

9. Palier selon l'une quelconques des revendications précédentes, **caractérisé en ce qu'**il comporte au moins une saillie (43, 143) implantée à la périphérie externe de la surépaisseur (42, 142) et consistant en une dent présentant une épaisseur inférieure à sa longueur circonférentielle.

10. Palier selon la revendication 9, **caractérisé en ce que** la dent est élargie circonférentiellement pour former un muret (143).

11. Palier selon les revendications 9 et 10, **caractérisé en ce qu'**il comporte des pattes (44) implantées circonférentiellement entre deux dents (43).

12. Palier selon la revendication 10, **caractérisé en ce qu'**il présente deux murets (143) implantés circonférentiellement entre deux dents (43) et deux surépaisseurs pour relier chacune une dent (43) à un muret (143).

13. Palier selon l'une quelconque des revendications précédentes, **caractérisé en ce qu'**il comporte une face frontale (164) présentant à sa périphérie externe des fentes de refoulement d'air (162) et **en ce que** la surépaisseur (42, 142) présente des creusures (52) au niveau de certaines fentes de refoulement d'air (162).

14. Machine électrique tournante à ventilation interne, notamment un alternateur ou un alterno-démarreur pour véhicule automobile,comportant un stator (3) et un rotor (40) logés dans un carter comportant au moins un palier (6), **caractérisée en ce qu'**elle comporte un palier (6) selon l'une quelconque des revendications 1 à 13.

15. Machine selon la revendication 14, **caractérisée en ce qu'**elle comporte, d'une part, un dispositif de redressement de courant (90) comprenant des élément de redressement de courant (10, 10') et le palier (6) constituant un dissipateur de chaleur et d'autre part, un capot de protection (12) renfermant le dispositif de redressement de courant (90) à la faveur d'une jupe (121) 160, et en ce le capot (12) présente une tubulure (250) de refroidissement d'un élément de redressement de courant (10, 10') s'étendant perpendiculairement à la jupe (121) du capot (12) et implantée en regard de la ou les saillies (44) d'évacuation de chaleur du palier (6).

## Claims

1. Bearing (6) for a rotary electrical machine with internal ventilation, such as an alternator of a motor vehicle, provided with a current rectifier device (90), comprising a heat dissipater which is constituted by the bearing (6) provided with areas (45) for fitting of the current rectifier elements, such as fitting holes, current rectifier elements (10), and bearing on its outer periphery at least one projection (43, 44, 143) for discharge of the heat, **characterised in that** it is provided with at least one excess thickness (42, 242) which is implanted in a manner adjacent to at least one fitting area (45) of a current rectifier element (10), and **in that** the projection (43, 44, 143) for discharge of heat is connected to the excess thickness (43, 44, 143).

2. Bearing according to claim 1, **characterised in that** the said projection (43, 44, 143) for discharge of heat is supported by the outer periphery of the excess thickness (42, 242).

3. Bearing according to claim 1 or 2, **characterised in that** it comprises a front surface (164) which has air intake openings (18), and **in that** the inner periphery of the excess thickness (42, 242) is adjacent to the outer periphery of at least one air intake opening (18).

4. Bearing according to any one of the preceding claims, **characterised in that** it comprises a front surface (164) which has on its outer periphery a centring support (168) for a cover (12), and **in that** the outer periphery of the excess thickness (42, 242) is delimited by the centring support (168).

5. Bearing according to any one of the preceding claims, **characterised in that** it has a front surface (164) with air intake openings (18) which are separated in pairs by arms (142) with a globally radial orientation, and **in that** the excess thickness (42, 242) has at least one tongue (41) which extends globally in the extension of an arm (142).

6. Bearing according to any one of the preceding claims, **characterised in that** it has a front surface (164), and **in that** the projection (43, 143, 44) is perpendicular to the front surface (164).

7. Bearing according to any one of claims 1 to 6, **characterised in that** it has a front surface (164), and **in that** the projection (43, 143, 44) is inclined relative to the front surface (164).

8. Bearing according to claim 6 or 7, **characterised in that** the projection consists of a lug (44) with radial orientation which is implanted on the outer periphery of the excess thickness (42), **in that** the lug (44) has a thickness which is smaller that its radial length, and **in that** it comprises at least one series of lugs (44) which are associated with a fitting area (45).

9. Bearing according to any one of the preceding claims, **characterised in that** it comprises at least one projection (43, 143) which is implanted on the outer periphery of the excess thickness (42, 143), and consists of a tooth with a thickness which is smaller than its circumferential length.

10. Bearing according to claim 9, **characterised in that** the tooth is enlarged circumferentially in order to form a small wall (143).

11. Bearing according to claims 9 and 10, **characterised in that** it comprises lugs (44) which are implanted circumferentially between two teeth (43).

12. Bearing according to claim 10, **characterised in that** it has two small walls (143) which are implanted circumferentially between two teeth (43), and two excess thicknesses in order each to connect a tooth (43) to a small wall (143).

13. Bearing according to any one of the preceding claims, **characterised in that** it comprises a front surface (164) which has on its outer periphery air delivery slots (162), and **in that** the excess thickness (42, 142) has hollows (52) at the level of certain air delivery slots (162).

14. Rotary electrical machine with internal ventilation, in particular an alternator or alternator-starter for a motor vehicle, comprising a stator (3) and a rotor (40) which are accommodated in a housing comprising at least one bearing (6), **characterised in that** it comprises a bearing (6) according to any one of claims 1 to 13.

15. Machine according to claim 14, **characterised in that** it comprises firstly a current rectifier device (90), comprising current rectifier elements (10, 10') and the bearing (6) which constitutes a heat dissipater, and secondly a protective cover (12) which encloses the current rectifier device (90) by means of a skirt (121) 160, and **in that** the cover (12) has a cooling nozzle (250) of a current rectifier element (10, 10') which extends perpendicularly to the skirt (121) of the cover (12), and is implanted opposite the projection(s) (44) for discharge of heat from the bearing (6).

## Patentansprüche

1. Lager (6) für eine drehende elektische Maschine mit Innenbelüftung, wie ein Generator für ein Kraftfahrzeug, ausgestattet mit einer Gleichrichtvorrichtung (90), die einen Kühlkörper umfasst, der aus dem Lager (6) gebildet wird, das Einbaubereiche (45) für die Gleichrichtelemente, wie Einbaubohrungen, und Gleichrichtelemente (10) umfasst und an seinem Außenumfang mindestens eine Auskragung zum Ableiten der Wärme (43, 44, 143) aufweist, **dadurch gekennzeichnet, dass** es mindestens eine Überhöhung (42, 242) umfasst, die so angeordnet ist, dass sie an mindestens einen Einbaubereich (45) für ein Gleichrichtelement (10) angrenzt, und **dass** die Auskragung zum Ableiten der Wärme (43, 44, 143) mit der Überhöhung (43, 44, 143) verbunden ist.

2. Lager nach Anspruch 1, **dadurch gekennzeichnet, dass** die Austragung zum Ableiten der Wärme (43, 44, 143) von dem Außenumfang der Überhöhung (42, 242) getragen wird.

3. Lager nach Anspruch 1 oder 2, **dadurch gekennzeichnet, dass** es eine Vorderseite (164) umfasst, die Lufteinlassöffnungen (18) aufweist, und dass der Innenumfang der Überhöhung (42, 242) an den Außenumfang von mindestens einer Lufteinlassöffnung (18) angrenzt.

4. Lager nach einem der vorhergehenden Ansprüche, **dadurch gekennzeichnet, dass** es eine Vorderseite (164) umfasst, die an ihrem Außenumfang einen Zentriersitz (168) für eine Abdeckung (12) aufweist, und dass der Außenumfang der Überhöhung (42, 242) durch den Zentriersitz (168) begrenzt ist.

5. Lager nach einem der vorhergehenden Ansprüche, **dadurch gekennzeichnet, dass** es eine Vorderseite (164) umfasst, die Lufteinlassöffnungen (18) aufweist, die paarweise getrennt sind durch Arme (142), die im Wesentlichen radial ausgerichtet sind, und **dass** die Überhöhung (42, 242) mindestens eine Zunge (41) aufweist, die sich im Wesentlichen in der Verlängerung eines Arms (142) erstreckt.

6. Lager nach einem der vorhergehenden Ansprüche, **dadurch gekennzeichnet, dass** es eine Vorderseite (164) aufweist, und dass die Auskragung (43, 143, 44) senkrecht zu der Vorderseite (164) angeordnet ist.

7. Lager nach Anspruch 1 bis 6, **dadurch gekennzeichnet, dass** es eine Vorderseite (164) aufweist, und dass die Auskragung (43, 143, 44) im \/erhältnis zu der Vorderseite (164) geneigt ist.

8. Lager nach Anspruch 6 oder 7, **dadurch gekennzeichnet, dass** die Auskragung aus einem Ansatz (44) besteht, der radial ausgerichtet und auf dem Außenumfang der Überhöhung (42) angeordnet ist, **dass** der Ansatz (44) eine Dicke aufweist, die geringer ist als seine radiale Lange, und dass es mindestens eine Reihe von Ansätzen (44) umfasst, die einem Einbaubereich (45) zugeordnet sind.

9. Lager nach einem der vorhergehenden Ansprüche, **dadurch gekennzeichnet, dass** es mindestens eine Auskragung (43, 143) umfasst, die auf dem Außenumfang der Überhöhung (42, 142) angeordnet ist und aus einem Zahn besteht, dessen Dicke geringer ist als seine Umfangslänge.

10. Lager nach Anspruch 9, **dadurch gekennzeichnet, dass** der Zahn umfänglich vergrößert ist, um eine Wand (143) zu bilden.

11. Lager nach Anspruch 9 und 10, **dadurch gekennzeichnet, dass** es Ansätze (44) umfasst, die umfänglich zwischen zwei Zähnen (43) angeordnet sind,

12. Lager nach Anspruch 10, **dadurch gekennzeichnet, dass** es zwei Wände (143) aufweist, die umfänglich zwischen zwei Zähnen (43) angeordnet sind, und zwei Überhöhungen, die jeweils einen Zahn (43) mit einer Wand (143) verbinden.

13. Lager nach einem der vorhergehenden Anspruchs, **dadurch gekennzeichnet, dass** es eine Vorderseite (164) umfasst, die auf ihrem Außenumfang Luftaustrittsschlitze (162) aufweist, und dass die Überhöhung (42, 142) an bestimmten Luftaustrittsschlitzen (162) Einsenkungen (52) aufweist.

14. Drehende elektrische Maschine mit Innenbelüftung, insbesondere ein Generator oder ein Starter-Generator für ein Kraftfahrzeug, die einen Stator (3) und einen Rotor (40) umfasst, die in einem Gehäuse angeordnet sind, das mindestens ein Lager (6) umfasst, **dadurch gekennzeichnet, dass** sie ein Lager (6) nach einem der Ansprüche 1 bis 13 umfasst.

15. Maschine nach Anspruch 14, **dadurch gekennzeichnet, dass** sie einerseits eine Gleichrichtvorrichtung (90), die Gleichrichtelemente (10, 10') aufweist, und das Lager (6), das einen Kühlkörper bildet, umfasst, und andererseits eine Schutzabdeckung (12), die die Gleichrichtvorrichung (90) mittels einer Schürze (121) 160 umschließt und dass die Abdeckung (12) ein Rohr (250) zum Kühlen eines Gleichrichtelements (10, 10') aufweist, das sich senkrecht zu der Schürze (121) der Abdeckung (12) erstreckt und gegenüber der oder den Auskragungen (44) zum Ableiten der Wärme aus dem Lager (6) angeordnet ist.
